# EUROPÄISCHE PATENTSCHRIFT

(11) **EP 3 124 938 B1**
(45) Veröffentlichungstag und Bekanntmachung des Hinweises auf die Patenterteilung: **20.02.2019**
(21) Anmeldenummer: 16178293.3
(22) Anmeldetag: 07.07.2016
(51) Int. Cl.: G01L 19/04, G01L 19/14, G01L 23/10, G01L 23/26

(54) **DRUCKSENSOR**
PRESSURE SENSOR
CAPTEUR DE PRESSION

(30) Priorität: 31.07.2015 EP 15179379; 15.01.2016 EP 16151559
(43) Veröffentlichungstag der Anmeldung: 01.02.2017
(73) Patentinhaber: Kistler Holding AG, 8408 Winterthur (CH)
(72) Erfinder: Buck, Reinhold, 8308 Illnau (CH); Giger, Martin, 8400 Winterthur (CH); Graf, Philip, 8570 Weinfelden (CH)

(56) Entgegenhaltungen:
- EP-A1- 2 781 903
- DE-A1- 4 314 296
- US-A- 4 645 965

## Beschreibung

### Technisches Gebiet

Die Erfindung betrifft einen Drucksensor nach dem Oberbegriff des unabhängigen Anspruchs.

### Stand der Technik

Drucksensoren sind bekannt und werden vielfältig eingesetzt. So wird mit piezoelektrischen Drucksensoren bei der Druckindizierung von Verbrennungsmotoren ein in einer Druckkammer herrschender Zylinderdruck in Abhängigkeit einer Kurbelwellenstellung oder einer Zeit erfasst. Verbrennungsmotoren umfassen Viertaktmotoren und Zweitaktmotoren wie Ottomotoren, Dieselmotoren, Wankelmotoren, usw.. Bei Schiffsdieselmotoren wird mit ihnen eine Langzeitüberwachung eines Zylinderdrucks durchgeführt. Mit piezoelektrischen Drucksensoren werden schnelle Druckverläufe erfasst, die normalerweise im Bereich von 150 bis 250 bar sind, die aber bei Vorentflammung und Motorklopfen Druckspitzen von 500 bar und höher aufweisen. Piezoelektrische Drucksensoren lassen sich aber auch bei der Drucküberwachung in Strahltriebwerken, Gasturbinen, Dampfturbinen, Dampfmaschinen, usw.. einsetzen.

Ein solcher piezoelektrischer Drucksensor ist in der Schrift CH394637A1 offenbart. Der piezoelektrische Drucksensor weist eine Membran auf, die durch eine Bohrung der Druckkammer direkt in die Druckkammer ragt. Ein Rand der Membran ist mit einem Gehäuse des piezoelektrischen Drucksensors verschweisst. Der von der Membran erfasste Druckverlauf wirkt auf einen piezoelektrischen Aufnehmer, der im Gehäuse nahe der Membran angeordnet ist. Der Druckverlauf erzeugt auf dem piezoelektrischen Aufnehmer elektrische Polarisationsladungen, welche über eine Elektrode als Signale abgenommen werden. Die Signale sind proportional zur Grösse des Druckverlaufs. Die Elektrode ist auf dem piezoelektrischen Aufnehmer angeordnet. Über einen elektrischen Leiter werden die Signale von der Elektrode zu einer Buchse für eine Steckverbindung eines Signalkabels zu einer Auswerteeinheit abgeleitet. Die Buchse ist an einer von der Membran abgewandten Seite des Gehäuses angebracht.

Die Erfindung ist jedoch nicht auf piezoelektrische Drucksensoren beschränkt. So zeigt die Schrift EP0140992A1 einen piezoresistiven Drucksensor, bei dem ein Aufnehmer mit aufgebrachten Piezowiderständen unter der Wirkung eines von einer Membran erfassten Druckverlaufes Signale erzeugt. Elektroden sind mit Anschlussstellen der Piezowiderstände elektrisch verbunden und leiten die Signale über Durchführungen in Form von Gleitbüchsen aus einem Gehäuse des Aufnehmers und über Kontaktoberflächen zu Litzen von elektrischen Leitern an eine Auswerteeinheit ab.

Nun ist der Drucksensor beim dauerhaften Einsatz starken Motorvibrationen und hohen Temperaturen von 200°C und höher ausgesetzt. So kann es zu Mikroreibung und Reibkorrosion bei Kontaktoberflächen von Elektroden, Anschlussstellen, Steckverbindungen und Durchführungen kommen, was die mechanische Stabilität der Signalableitung schwächen kann. Auch kann ein Signalkabelmantel bei hohen Temperaturen ausgasen, welche Gase sich an Kontaktoberflächen von Elektroden, Anschlussstellen, Steckverbindungen und Durchführungen durch Reibpolymerisation lokal vernetzen und dort Ablagerungen bilden. Und es kann bei hohen Temperaturen zur Diffusion von unedlen Metallen und zum lokalen Aufbau von Oxidschichten an Kontaktoberflächen von Elektroden, Anschlussstellen, Steckverbindungen und Durchführungen kommen. Diese Effekte können einzeln oder kombiniert auftreten. In der Folge kann sich der elektrische Widerstand bei der Signalableitung verändern. So kann der elektrische Kontaktwiderstand aus dem mΩ-Bereich um mehrere Grössenordnungen in den MΩ-Bereich ansteigen und die Signale verfälschen, die an die Auswerteeinheit abgeleitet werden, was zu fehlerhaften Signalauswertungen führt. Generell ist eine Sicherstellung einer elektrischen Isolation der Signalableitung auch bei hohen Temperaturen sehr wichtig, denn es können sich an Bestandteilen des Drucksensors elektrische Kriechströme einstellen und die Signalableitung verfälschen. Auch können bei hohen Temperaturen unterschiedliche Ausdehnungskoeffizienten der Bestandteile des Drucksensors lokal zu mechanischen Spannungen führen. Schliesslich können die Bestandteile des Drucksensors bei hohen Temperaturen vorzeitig altern. Solche thermisch induzierten mechanische Spannungen und derartiges vorzeitiges Altern wirken sich nachteilig auf die Lebensdauer des Drucksensors aus. US4645965A1 zeigt einen Drucksensor mit einem piezoelektrischen Drucksensor und einer Auswerteeinheit zum Verstärken der Signale des Drucksensors. Der Drucksensor ist in einem metallischen Gehäuse montiert, das als elektromagnetische Abschirmung dient. Raum zwischen der Auswerteeinheit und dem Gehäuse ist mit Vergussmasse gefüllt, welche die Auswerteeinheit elektrisch gegenüber dem Gehäuse isoliert und welche die Auswerteeinheit auch vor Vibrationskräften schützt.

DE4314296A1 bezieht sich auf einen Druckmessumformer in Dünnfilm-Technologie in der Ausführung einer Sensoreinheit mit einem Sensorelement und einer Elektronikplatine in einem Gehäuseteil. Auch hier ist ein Hohlraum zwischen einem Gehäusemantel und der Elektronikplatine mit Vergussmasse zur Dämpfung der Sensoreinheit gegen Schock und Vibration ausgegossen.

EP2781903A1 offenbart eine Druckmessstecker mit einem piezoresistivem Sensorelement, das zusammen mit einer elektronischen Schaltung in einem Gehäuse angeordnet ist. Die elektronische Schaltung erzeugt aus einer elektrischen Widerstandsänderung des Sensorelements ein Messsignal. Sensorelement und elektrische Schaltung sind räumlich voneinander beabstandet und über eine Verbindungsstruktur elektrisch verbunden. Die Verbindungsstruktur weist eine flexible Leiterplatte und zwei längliche Teile auf, die im Schnappverschluss mechanisch verbindbar sind.

Eine erste Aufgabe der vorliegenden Erfindung besteht darin, einen Drucksensor anzugeben, bei dem eine Signalverfälschung bei der Signalableitung wirksam vermieden wird. Eine weitere Aufgabe der vorliegenden Erfindung ist es, einen Drucksensor bereitzustellen, bei dem die Signalableitung und die Auswerteeinheit auch bei dauerhaft starken Motorvibrationen mechanisch stabil angeordnet sind. Eine zusätzliche Aufgabe der vorliegenden Erfindung besteht darin, einen Drucksensor aufzuzeigen, bei dem seine Bestandteile auch bei hohen Temperaturen weitgehend frei von mechanischen Spannungen sind und nicht vorzeitig altern. Schliesslich soll der Drucksensor kostengünstig herstellbar sein.

### Darstellung der Erfindung

Zumindest eine dieser Aufgaben wird durch die Merkmale des unabhängigen Anspruchs gelöst.

Die Erfindung betrifft einen Drucksensor mit einer Sensoranordnung und einer Auswerteeinheit; welche Sensoranordnung einen Aufnehmer und eine Elektrodenanordnung aufweist; welcher Aufnehmer unter der Wirkung eines Druckverlaufes Signale erzeugt und welche Elektrodenanordnung die Signale an die Auswerteeinheit ableitet; wobei die Auswerteeinheit ein Auswerteeinheitgehäuse, eine elektrische Leiterplatte und ein Versteifungselement aufweist; wobei das Versteifungselement hohlzylinderförmig ist; wobei das Versteifungselement mit der elektrischen Leiterplatte mechanisch verbunden ist; wobei das Versteifungselement in der Radialebene bereichsweise um die elektrische Leiterplatte herum angeordnet ist; wobei das Versteifungselement aus mindestens zwei gleichartige Schalen besteht, welche Schalen mechanisch mit der elektrischen Leiterplatte und/oder mechanisch miteinander verbindbar sind; und wobei das Versteifungselement die elektrische Leiterplatte im linienförmigen oder flächigen mechanischen Kontakt umschliesst, und wodurch das Versteifungselement in Radialebene auftretende mechanische Resonanzschwingungen der elektrischen Leiterplatte dämpft.

Die Erfindung basiert auf der Erkenntnis, dass die elektrische Leiterplatte eine grössere Ausdehnung entlang einer Längsachse des Drucksensors aufweist, und dass beim Einsatz des Drucksensors auftretende Motorvibrationen in einer senkrecht zur Längsachse stehenden Radialebene mechanische Resonanzschwingungen erzeugen. Hier setzt die Erfindung ein, das Versteifungselement versteift die elektrische Leiterplatte in dieser Radialebene. Vorzugsweise fixiert das Versteifungselement die elektrische Leiterplatte in ihrer Bewegungsfreiheit in der Radialebene gegenüber dem Auswerteeinheitgehäuse. Motorvibrationen können so die elektrische Leiterplatte in Radialebene nur noch vermindert zu mechanischen Resonanzschwingungen anregen, was die mechanische Belastung der an der Signalableitung beteiligten Bestandteile des Drucksensors im Bereich der elektrischen Leiterplatte dauerhaft reduziert.

### Kurze Beschreibung der Zeichnungen

Im Folgenden wird die Erfindung beispielhaft unter Beizug der Figuren anhand eines piezoelektrischen Drucksensors näher erklärt. Es zeigen
- Fig. 1: einen Schnitt durch eine erste Ausführungsform eines piezoelektrischen Drucksensors mit Sensoranordnung und Auswerteeinheit;
- Fig. 2: einen Schnitt durch eine zweite Ausführungsform eines piezoelektrischen Drucksensors mit Sensoranordnung und Auswerteeinheit;
- Fig. 3: einen Schnitt durch eine bevorzugte Ausführungsform der Sensoranordnung nach Fig. 1 oder 2;
- Fig. 4: eine Draufsicht eines Teils der ersten Ausführungsform des piezoelektrischen Drucksensors nach Fig. 1 ohne Auswerteeinheitgehäuse und ohne elektrisches Isolationselement;
- Fig. 5: eine Ansicht einer elektrischen Leiterplatte der ersten Ausführungsform des piezoelektrischen Drucksensors nach Fig. 1 oder 4;
- Fig. 6: eine Draufsicht der elektrischen Leiterplatte der ersten Ausführungsform des piezoelektrischen Drucksensors nach Fig. 1, 4 oder 5;
- Fig. 7: eine Draufsicht eines Teils der zweiten Ausführungsform des piezoelektrischen Drucksensors nach Fig. 2 ohne Auswerteeinheitgehäuse und ohne elektrisches Isolationselement;
- Fig. 8: eine Draufsicht der elektrischen Leiterplatte der zweiten Ausführungsform des piezoelektrischen Drucksensors nach Fig. 2 oder 7;
- Fig. 9: eine Ansicht der elektrischen Leiterplatte der zweiten Ausführungsform des piezoelektrischen Drucksensors nach Fig. 2, 7 oder 8;
- Fig. 10: eine vergrösserte Draufsicht eines Bereichs A der ersten Ausführungsform des piezoelektrischen Drucksensors nach Fig. 4;
- Fig. 11: eine vergrösserte Draufsicht eines Bereichs B der zweiten Ausführungsform des piezoelektrischen Drucksensors nach Fig. 7;
- Fig. 12: eine Ansicht eines Teils der ersten Ausführungsform des piezoelektrischen Drucksensors nach Fig. 4 beim Aufsetzen des elektrischen Isolationselements;
- Fig. 13: eine Ansicht eines Teils der ersten Ausführungsform des piezoelektrischen Drucksensors nach Fig. 4 oder 12 nach dem Aufsetzen des elektrischen Isolationselements;
- Fig. 14: ein Querschnitt durch das elektrische Isolationselement nach Fig. 12 oder 13;
- Fig. 15: eine Draufsicht der ersten Ausführungsform des piezoelektrischen Drucksensors nach Fig. 1, 4, 12 oder 13 vor der stoffschlüssigen Verbindung der Elektrodenanordnung der Sensoranordnung mit der elektrischen Leiterplatte der Auswerteeinheit;
- Fig. 16: eine Draufsicht der ersten Ausführungsform des piezoelektrischen Drucksensors nach Fig. 1, 4, 12, 13 oder 15 nach der stoffschlüssigen Verbindung der Elektrodenanordnung der Sensoranordnung mit der elektrischen Leiterplatte der Auswerteeinheit; und
- Fig. 17: eine vergrösserte Draufsicht eines Bereichs C der ersten Ausführungsform des piezoelektrischen Drucksensors nach Fig. 15.

### Wege zur Ausführung der Erfindung

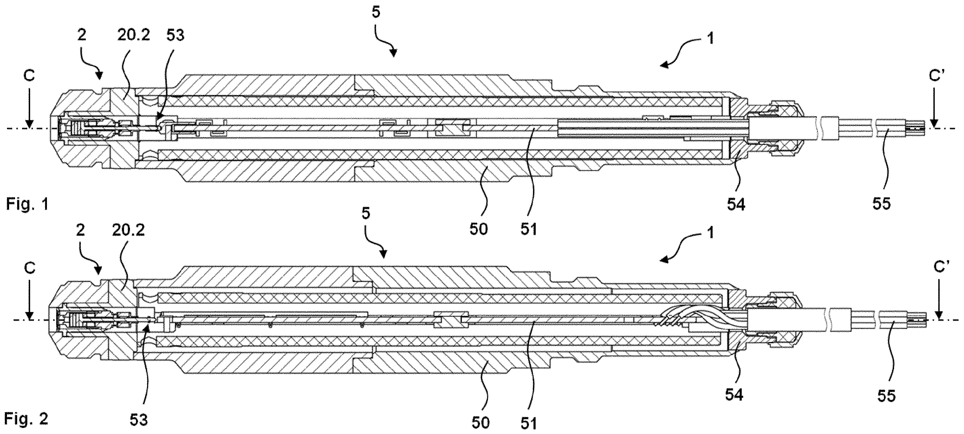

Die Fig. 1 und 2 zeigen Schnitte durch zwei Ausführungsformen des erfindungsgemässen piezoelektrischen Drucksensors 1. Die Schnitte sind entlang einer Längsachse CC' des einsatzfertig montierten piezoelektrischen Drucksensors 1 dargestellt. Die Längsachse CC', eine Vertikalachse AA' und eine Horizontalachse BB' stehen senkrecht aufeinander. Eine Richtung entlang der Längsachse CC' wird auch Längsrichtung genannt, eine Richtung senkrecht zur Längsrichtung wird auch Radialrichtung genannt. Vertikalachse AA' und Horizontalachse BB' spannen eine Radialebene AB auf. Radialrichtungen liegen in der Radialebene AB. Der piezoelektrische Drucksensor 1 und seine Bestandteile sind im Querschnitt bezüglich der Längsachse CC' weitgehend kreisförmig. Das Adjektiv "weitgehend" schliesst eine Variation der Kreisform von ±10% ein. Bei Kenntnis der vorliegenden Erfindung können der piezoelektrische Drucksensor und seine Bestandteile im Querschnitt aber auch rechteckig, vieleckig, usw. sein. So ist beispielsweise eine elektrische Leiterplatte 51 rechteckig.

Die Bestandteile des piezoelektrischen Drucksensor 1 können mechanischen miteinander kontaktiert oder mechanisch miteinander verbunden sein. Im Sinne der Erfindung sind bei einem mechanischen Kontakt mehrere Bestandteile lediglich in direkter Berührung miteinander, während bei einer mechanischen Verbindung mehrere Bestandteile stoffschlüssig, kraftschlüssig oder formschlüssig miteinander fixiert sind. Ein mechanischer Kontakt ist also keine mechanische Verbindung. Ein mechanischer Kontakt ist nicht druckdicht. Mit dem Adjektiv "druckdicht" wird eine Festigkeit gegen Druckverläufe ab 10 bar bezeichnet.

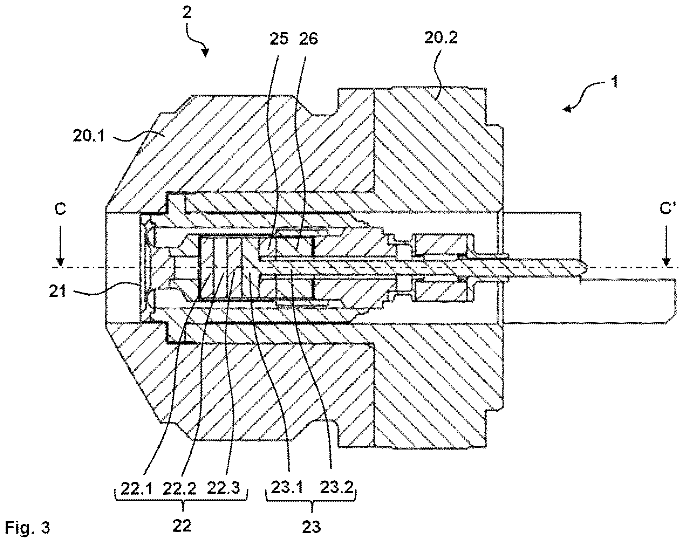

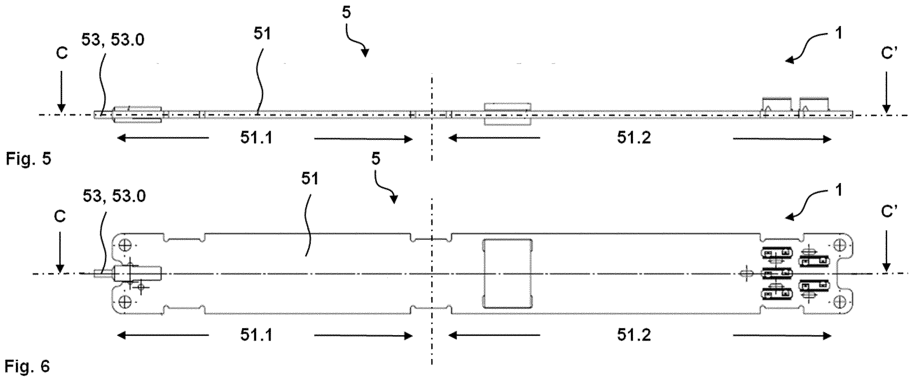

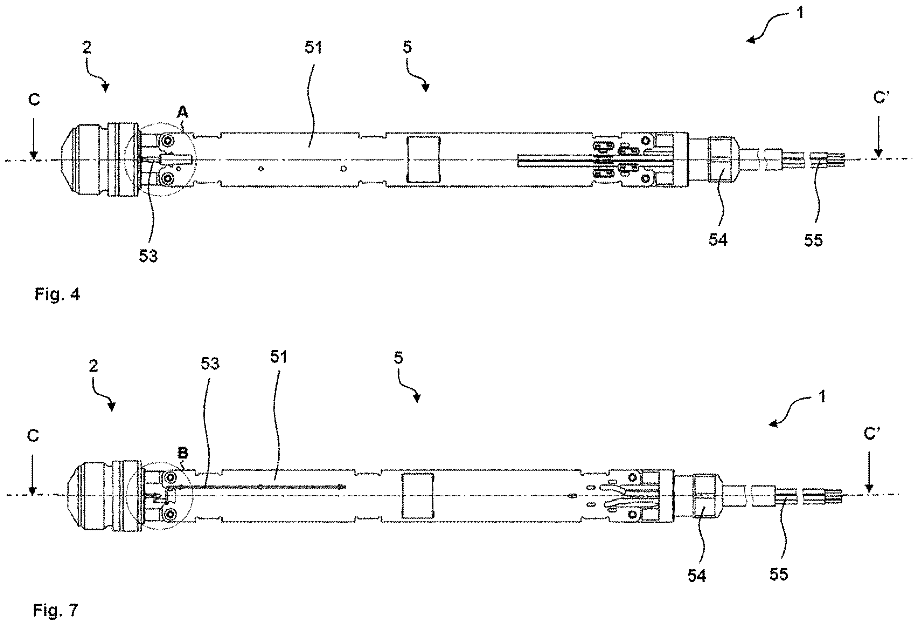

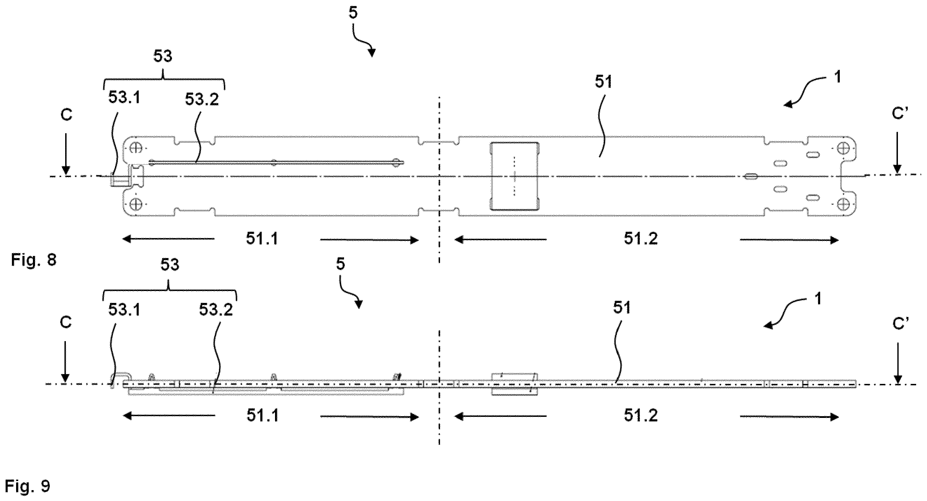

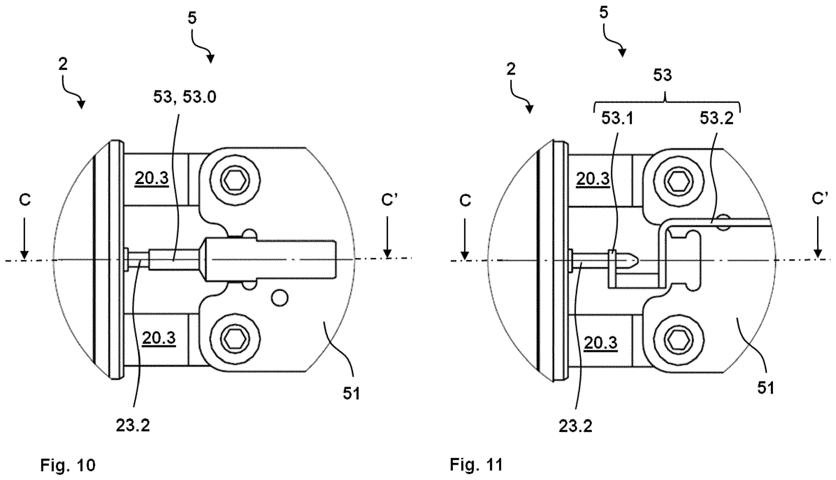

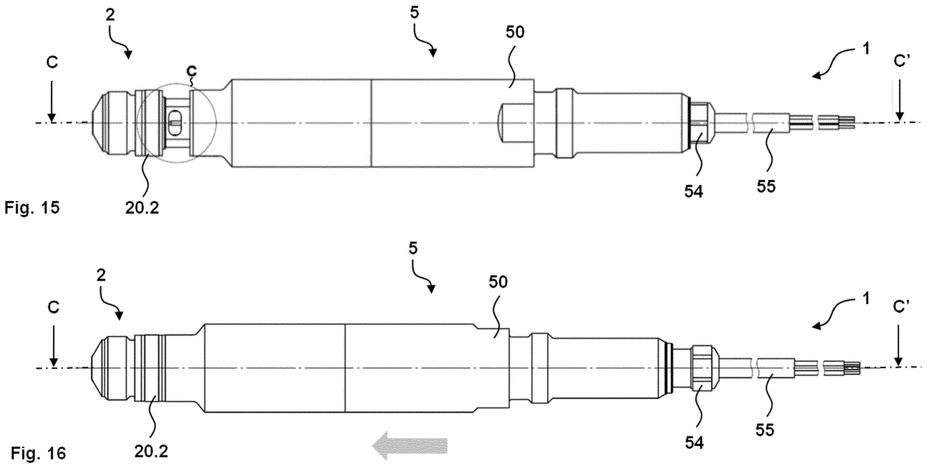

Der piezoelektrische Drucksensor 1 weist eine Sensoranordnung 2 und eine Auswerteeinheit 5 auf. Die Auswerteeinheit 5 ist direkt mit der Sensoranordnung 2 elektrisch und mechanisch verbunden, wie in Fig. 1 und 2 dargestellt. Fig. 3 zeigt die Sensoranordnung 2 als Halbzeug. Auch die Auswerteeinheit 5 ist ein Halbzeug, mit mehreren Bestandteilen wie in den Fig. 4 bis 9 und 12 bis 14 dargestellt. Die Fig. 10, 11 und 17 zeigen vergrösserte Draufsichten von Bereichen A, B und C der elektrischen und mechanischen Verbindung der Sensoranordnung 2 mit der Auswerteeinheit 5. Und Fig. 15 und 16 zeigen Ansichten des Verfahrens zur Herstellung der elektrischen und mechanischen Verbindung der Sensoranordnung 2 mit der Auswerteeinheit 5.

Die Sensoranordnung 2 ist in einem vorderen Bereich des piezoelektrischen Drucksensors 1 angeordnet, sie weist eine Membran 21, eine Sensorgehäuseanordnung 20, einen piezoelektrischen Aufnehmer 22 und eine Elektrodenanordnung 23 auf. Der piezoelektrische Drucksensor 1 ist mit einer Wandung einer Druckkammer mechanisch verbunden und die Membran 21 ragt durch eine Bohrung direkt in die Druckkammer. Die mechanische Verbindung erfolgt durch Kraftschluss oder Formschluss. Der vordere Bereich des piezoelektrischen Drucksensors 1 ist im Einsatz des piezoelektrischen Drucksensors 1 nahe der Druckkammer dauerhaft starken Motorvibrationen und hohen Temperaturen ausgesetzt. Die Adjektive "vorderes" und "hinteres" werden für den piezoelektrischen Drucksensor 1 und seine Bestandteile so verwendet, dass mit "vorderes" ein zur Membran 21 hin orientierter Bereich bezeichnet wird, während mit "hinteres" ein von der Membran 21 abgewandter Bereich bezeichnet wird.

Die Sensoranordnung 2 weist die Sensorgehäuseanordnung 20 einen Dichtkonus 20.1 und einen Sensorflansch 20.2 auf. Der Sensorflansch 20.2 wird auch Versteifungsgehäuse 20.2 genannt. Der Sensorflansch 20.2 nimmt den piezoelektrischen Aufnehmer 22 und mit ihm benachbarte Bestandteile des piezoelektrischen Drucksensors 1 auf. Der Sensorflansch 20.2 verhindert auch eine Übertragung von mechanischen Verspannungen, die von der mechanischen Verbindung des piezoelektrischen Drucksensors 1 mit der Wandung der Druckkammer herrühren, welche mechanischen Verspannungen über die Sensorgehäuseanordnung 20 auf den piezoelektrischen Aufnehmer 22 gelangen und die Erfassung des Druckverlaufs stören und die Signale verfälschen können. Dichtkonus 20.1 und Sensorflansch 20.2 bestehen aus mechanisch nachgiebigem Material wie aus Reinmetallen, Nickellegierungen, Kobaltlegierungen, Eisenlegierungen, usw. und sind mechanisch miteinander verbunden. Die mechanische Verbindung erfolgt durch Stoffschluss wie Schweissen, Diffusionsschweissen, Thermokompressionsbonden, Löten, usw.. vorzugsweise bestehen Dichtkonus 20.1 und Sensorflansch 20.2 aus elektrisch leitendem Material. Bei Kenntnis der vorliegenden Erfindung kann der Fachmann die Sensoranordnung auch ohne Sensorflansch realisieren, so dass die Sensoranordnung nur einen Dichtkonus umfasst.

Die stirnseitige Membran 21 besteht aus mechanisch nachgiebigem Material wie aus Reinmetallen, Nickellegierungen, Kobaltlegierungen, Eisenlegierungen, usw.. Ein Rand der Membran 21 ist vollumfänglich mit dem Sensorflansch 20.2 mechanisch verbunden. Die mechanische Verbindung erfolgt durch Stoffschluss wie Schweissen, Diffusionsschweissen, Thermokompressionsbonden, Löten, usw.. Ein von der Membran 21 erfasster Druckverlauf wirkt als Normalkraft auf den piezoelektrischen Aufnehmer 22.

Der piezoelektrische Aufnehmer 22 ist auf der Längsachse CC' direkt hinter der Membran 21 angeordnet. Der piezoelektrische Aufnehmer 22 weist ein erstes Auflageelement 22.1, ein zweites Auflageelement 22.3 und ein piezoelektrisches Aufnehmerelement 22.2 auf. Bezogen auf die Längsachse CC' ist das piezoelektrische Aufnehmerelement 22.2 zwischen dem ersten Auflageelement 22.1 und dem zweiten Auflageelement 22.3 angeordnet. Die Auflageelemente 22.1, 22.3 verteilen die Normalkraft gleichmässig auf das piezoelektrische Aufnehmerelement 22.2. Die Auflageelemente 22.1, 22.3 sind zylinderförmig oder hohlzylinderförmig und bestehen aus elektrisch leitfähigem und mechanisch steifem Material wie aus Reinmetallen, Nickellegierungen, Kobaltlegierungen, Eisenlegierungen, elektrisch leitender Keramik, Keramik mit elektrisch leitender Beschichtung, usw.. Die Membran 21 ist im flächigen mechanischen Kontakt mit dem ersten Auflageelement 22.1. Und auch das erste Auflageelement 22.1 und das zweite Auflageelement 22.3 sind im flächigen mechanischen Kontakt mit dem piezoelektrischen Aufnehmerelement 22.2. Diese flächigen mechanischen Kontakte können auch durch mechanische Verbindung realisiert werden. Die mechanischen Verbindungen erfolgen durch Stoffschluss wie Diffusionsschweissen, Thermokompressionsbonden, Löten, usw.. Bei Kenntnis der vorliegenden Erfindung kann der Fachmann den piezoelektrischen Aufnehmer auch ohne Auflageelemente realisieren oder einen piezoelektrischen Aufnehmer mit nur einem Auflageelement zwischen Membran und piezoelektrischem Aufnehmerelement realisieren.

Das piezoelektrische Aufnehmerelement 22.2 ist zylinderförmig oder hohlzylinderförmig und besteht aus piezoelektrischem Material wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw.. Das piezoelektrische Aufnehmerelement 22.2 ist so orientiert, dass es eine hohe Empfindlichkeit für den aufzunehmenden Druckverlauf hat. Vorzugsweise ist das piezoelektrische Aufnehmerelement 22.2 so orientiert, dass auf den gleichen Oberflächen auf denen die Normalkraft einwirkt, auch elektrische Polarisationsladungen erzeugt werden. Die Normalkraft kann auf die Oberfläche belastend oder entlastend einwirken. Bei mechanischer Belastung durch die Normalkraft werden elektrische Polarisationsladungen mit einem ersten, beispielsweise negativem Vorzeichen erzeugt; bei mechanischer Entlastung durch die Normalkraft elektrische Polarisationsladungen mit einem zweiten, dem ersten Vorzeichen entgegengesetztem Vorzeichen erzeugt. Bei Kenntnis der vorliegenden Erfindung kann der Fachmann natürlich auch mehr als ein piezoelektrisches Aufnehmerelement verwenden.

Eine Elektrodenanordnung 23 ist auf der von der Membran 21 abgewandten Seite des piezoelektrischen Aufnehmers 22 auf der Längsachse CC' direkt hinter dem piezoelektrischen Aufnehmer 22 angeordnet. Die Elektrodenanordnung 23 weist einen zylinderförmigen Ladungsabgriff 23.1 und eine stabförmige Ladungsableitung 23.2 auf. Ladungsabgriff 23.1 und Ladungsableitung 23.2 sind elektrisch miteinander verbunden. Die Elektrodenanordnung 23 besteht aus elektrisch leitfähigem Material wie aus Reinmetallen, Nickellegierungen, Kobaltlegierungen, Eisenlegierungen, usw.. Ladungsabgriff 23.1 und Ladungsableitung 23.2 können einstückig sein oder mechanisch miteinander verbunden sein. Das Material der Elektrodenanordnung 23 weist vorzugsweise einen thermischen Längenausdehnungskoeffizienten im Bereich von 10 bis 18 ppm/°C, vorzugsweise im Bereich von 10 bis 12 ppm/°C auf. Beliebige mechanische Verbindungen wie Stoffschluss, Formschluss und Kraftschluss sind möglich.

Eine vordere Oberfläche des Ladungsabgriffs 23.1 ist derart im flächigen elektrischen Kontakt mit einer ladungsabgebenden hinteren Oberfläche des zweiten Auflageelementes 22.3, das auch bei Normalkrafteinwirkung keine nichtkontaktierte Bereiche mit lokalen hohen elektrischen Spannungen und elektrischen Kriechströmen auftreten. Der flächige elektrische Kontakt von Ladungsabgriff 23.1 und zweitem Auflageelement 22.3 ist durch einen flächigen mechanischen Kontakt realisiert. Bei Kenntnis der vorliegenden Erfindung kann der Fachmann den flächigen mechanischen Kontakt auch durch eine mechanische Verbindung realisieren. Die mechanische Verbindung erfolgt durch Stoffschluss wie Diffusionsschweissen, Thermokompressionsbonden, Löten, usw..

Elektrische Polarisationsladungen mit erstem Vorzeichen werden von der Elektrodenanordnung 23 als Signale abgenommen und an die Auswerteeinheit 5 abgeleitet. Elektrische Polarisationsladungen mit zweitem Vorzeichen werden über die Membran 21 oder eine Spannhülse vom geerdeten Sensorflansch 20.2 als Rückleitungssignale abgenommen und an die Auswerteeinheit 5 abgeleitet. Die elektrische Stromstärke der Signale bzw. Rückleitungssignale ist in der Grössenordnung von 1pA und somit sehr klein und somit durch elektrische Kriechströme, die über das elektrische Isolationsmaterial fliessen, verfälschbar. Obwohl figürlich nicht dargestellt, kann die Signalableitung bei Kenntnis der vorliegenden Erfindung auch mit einem Schutzschirm (Guard) realisiert werden, wo ein Schutzschirm aus elektrisch leitendem Material die Signalableitung umgibt, welcher Schutzschirm auf einem Bezugspotential der Signalableitung liegt. Elektrische Kriechströme fliessen dann zwischen Bezugspotential und Guard. Zwischen Guard und Signalableitung fliessen keine elektrischen Kriechströme, da eine Potentialdifferenz gleich Null ist. Der Schutzschirm kann die Signalableitung, elektrische Signalleiter der elektrischen Leiterplatte, elektrische Anschlüsse von elektronischen Komponenten der elektrischen Leiterplatte, usw. umgeben. Auch kann der Fachmann elektrische Polarisationsladungen mit zweitem Vorzeichen ebenfalls als weitere Signale verwenden. So kann der Fachmann die elektrischen Polarisationsladungen mit zweitem Vorzeichen vom Erdpotential elektrisch isoliert an die Auswerteeinheit ableiten. Dies kann durch eine stoffschlüssige elektrische Verbindung wie Crimpen, usw. der Sensorgehäuseanordnung mit einer elektromagnetischen Abschirmung des Auswerteeinheitgehäuses erfolgen.

Die Elektrodenanordnung 23 ist durch einen elektrischen Isolationskörper 25 gegenüber dem Sensorflansch 20.2 elektrisch isoliert. Der elektrische Isolationskörper 25 ist hohlzylinderförmig und besteht aus elektrisch isolierendem und mechanisch steifem Material wie Keramik, Al₂O₃-Keramik, Saphir, usw.. Der elektrische Isolationskörper 25 ist auf der von der Membran 21 abgewandten Seite des Ladungsabgriffs 23.1 auf der Längsachse CC' direkt hinter dem Ladungsabgriff 23.1 angeordnet. Der elektrische Isolationskörper 25 ist im flächigen mechanischen Kontakt mit dem Ladungsabgriff 23.1. Die Ladungsableitung 23.2 erstreckt sich bis zu einem vom piezoelektrischen Aufnehmer 22 abgewandten Ende der Sensoranordnung 2.

Ein Kompensationselement 26 kompensiert unterschiedliche thermische Ausdehnungskoeffizienten der Bestandteile des piezoelektrischen Drucksensors 1. Das Kompensationselement 26 ist hohlzylinderförmig und besteht aus mechanisch steifem Material wie aus Reinmetallen, Nickellegierungen, Kobaltlegierungen, Eisenlegierungen, Keramiken, Al₂O₃-Keramiken, Saphir, usw.. Das Kompensationselement 26 ist auf der von der Membran 21 abgewandten Seite des elektrischen Isolationskörpers 25 auf der Längsachse CC' direkt hinter dem elektrischen Isolationskörper 25 angeordnet. In der Ausführungsform der Sensoranordnung 2 nach Fig. 3 ist das Kompensationselement 26 im flächigen mechanischen Kontakt mit dem elektrischen Isolationskörper 25. Bei Kenntnis der vorliegenden Erfindung kann der Fachmann das Kompensationselement auch anstelle eines Auflageelementes auf der der Membran zugewandten Seite des Ladungsabgriffs anordnen. Das Kompensationselement kann anstelle des ersten Auflageelementes zwischen der Membran und dem piezoelektrischen Aufnehmerelement angeordnet sein, das Kompensationselement kann auch anstelle des zweiten Auflageelementes zwischen dem piezoelektrischen Aufnehmerelement und dem Ladungsabgriff angeordnet sein.

Die Auswerteeinheit 5 weist ein Auswerteeinheitgehäuse 50, die elektrische Leiterplatte 51 und ein Versteifungselement 52.1, 52.2 auf. Die elektrische Leiterplatte 51 und das Versteifungselement 52.1, 52.2 sind im Auswerteeinheitgehäuse 50 der Auswerteeinheit 5 angeordnet. Das Versteifungselement 52.1, 52.2 ist entlang der Radialrichtung zwischen der elektrischen Leiterplatte 51 und dem Auswerteeinheitgehäuse 50 angeordnet. Die Auswerteeinheit 5 weist ferner ein elektrisches Verbindungselement 53, einen Signalkabelflansch 54 und ein Signalkabel 55 auf. Das Versteifungselement 52.1, 52.2 wird auch elektrisches Isolationselement 52.1, 52.2 genannt. Das Auswerteeinheitgehäuse 50 wird auch Leiterplattengehäuse 50 genannt.

Die elektrische Leiterplatte 51 besteht aus Trägermaterial wie Polytetrafluorethylen, Polyimid, Al₂O₃-Keramik, Kohlenwasserstoff-Keramik-Laminate, usw.. Das Trägermaterial ist elektrisch isolierend mit einem spezifischen Durchgangswiderstand grösser/gleich 10¹⁵Ωcm bei Raumtemperatur, vorzugsweise grösser/gleich 10¹⁶Ωcm bei Raumtemperatur. Das Trägermaterial ist für dauerhafte Einsatztemperaturen kleiner/gleich 280°C ausgelegt. Gerade durch den sehr hohen spezifischen Durchgangswiderstand wird sichergestellt, dass auch bei dauerhaften Einsatztemperaturen nahe unterhalb von 280° die Signalableitung nicht durch elektrische Kriechströme verfälscht werden kann. Das Trägermaterial weist vorzugsweise einen thermischen Längenausdehnungskoeffizienten im Bereich von 10 bis 18 ppm/°C, vorzugsweise im Bereich von 10 bis 12 ppm/°c auf, der weitgehend gleich dem thermischen Längenausdehnungskoeffizienten von der Ladungsableitung 23.2 und/oder vom elektrische Verbindungselement 53 ist.

Die elektrische Leiterplatte 51 weist einen Hochtemperaturbereich 51.1 und einen Normaltemperaturbereich 51.2 auf. Der Hochtemperaturbereich 51.1 ist in einen vorderen bis mittleren Bereich der elektrischen Leiterplatte 51 angeordnet. Der Hochtemperaturbereich 51.1 ist der Sensoranordnung 2 zugewandt. Der Normaltemperaturbereich 51.2 ist in einen mittleren bis hinteren Bereich der elektrischen Leiterplatte 51 angeordnet. Der Normaltemperaturbereich 51.2 ist von der Sensoranordnung 2 abgewandt. Im Hochtemperaturbereich 51.1 der elektrischen Leiterplatte 51 ist die dauerhafte Einsatztemperatur kleiner/gleich 280°C. Der Hochtemperaturbereich 51.1 erstreckt sich vorzugsweise über 80% der Länge der elektrischen Leiterplatte 51, vorzugsweise über 50% der Länge der elektrischen Leiterplatte 51, vorzugsweise über 30% der Länge der elektrischen Leiterplatte 51, vorzugsweise über 20% der Länge der elektrischen Leiterplatte 51.

Die elektrische Leiterplatte 51 weist elektrische Signalleiter auf. Die elektrischen Signalleiter sind aus elektrisch leitfähigem Material wie aus Reinmetallen, Nickellegierungen, Kobaltlegierungen, Eisenlegierungen, usw.. Die elektrischen Signalleiter liegen mit einer Unterseite flächig auf dem Trägermaterial der elektrischen Leiterplatte 51. Vorzugsweise sind die elektrischen Signalleiter mehrlagig, eine erste Lage besteht aus einer Palladium-Nickel-Legierung, eine zweite Lage besteht aus Gold. Die erste Lage ist direkt auf das Trägermaterial der Leiterplatte 51 plattiert, die zweite Lage ist auf die erste Lage aufgedampft. Die erste Lage dient als Sperre für eine Diffusion von Gold in das Trägermaterial der elektrischen Leiterplatte 51. Die zweite Lage dient als Korrosionsschutz mit geringem elektrischen Widerstand und sehr guten Löteigenschaften. Eine Oberseite der elektrischen Signalleiter ist entweder offen (Surface Microstrip) oder mit Lötstopplack bedeckt (Coated Microstrip). Im Hochtemperaturbereich 51.1 der elektrischen Leiterplatte 51 sind vorzugsweise keine elektrischen Signalleiter angeordnet, um so eine Wärmeleitung über das elektrisch leitfähige Material der elektrischen Signalleiter vom Hochtemperaturbereich 51.1 in den Niedertemperaturbereich 51.2 zu vermeiden. Alternativ sind im Hochtemperaturbereich 51.1 der elektrischen Leiterplatte 51 nur elektrische Signalleiter für eine Signalableitung angeordnet, um so eine Wärmeleitung über das elektrisch leitfähige Material der elektrischen Signalleiter vom Hochtemperaturbereich 51.1 in den Niedertemperaturbereich 51.2 gering zu halten. Ausser den elektrischen Signalleiterm für die Signalableitung sind dann im Hochtemperaturbereich 51.1 der elektrischen Leiterplatte 51 keine weiteren elektrischen Signalleiter angeordnet.

Die elektrische Leiterplatte 51 ist mit elektronischen Komponenten wie elektrische Widerstände, elektrische Kapazitäten, Halbleiterelemente, Prozessoren, usw. bestückt. Die elektronischen Komponenten sind vorzugsweise nur im Normaltemperaturbereich 51.2 der elektrischen Leiterplatte 51 angeordnet, um so ein vorzeitiges Altern der elektronischen Komponenten zu vermeiden. Im Normaltemperaturbereich 51.2 ist die dauerhafte Einsatztemperatur kleiner/gleich 120°C, so dass die elektronischen Komponenten lediglich einen erweiterten Industriestandard mit einer oberen dauerhaften Einsatztemperatur von +125°C erfüllen müssen, was kostengünstig ist. Bei Kenntnis der vorliegenden Erfindung kann der Fachmann natürlich auch eine Dickschichtschaltung mit einem Träger aus Nickellegierungen, Kobaltlegierungen, Eisenlegierungen, Al₂O₃-Keramik, usw. mit einer dauerhaften Einsatztemperatur oberhalb 500°C verwenden, was jedoch vergleichsweise sehr teuer ist.

Auf der elektrischen Leiterplatte 51 ist Lötstopplack angebracht. Lötstopplack schützt die elektronischen Komponenten und elektrische Signalleiter vor Korrosion. Auch verhindert Lötstopplack ein Benetzen des Trägermateriales der elektrischen Leiterplatte 51 mit Lötmaterial bei einer Bestückung der elektrischen Leiterplatte 51 mit elektronischen Komponenten, und vermeidet so eine Herstellung von unbeabsichtigten elektrischen Verbindungen bei der Bestückung. Vorteilhafterweise ist im Hochtemperaturbereich 51.1 der elektrischen Leiterplatte 51 kein Lötstopplack aufgebracht. Allerdings ist der spezifische Durchgangswiderstand von Lötstopplack bei Raumtemperatur wesentlich kleiner als 10¹⁴Ωcm, wodurch bei hohen Temperaturen nahe unterhalb von 280°C eine ausreichende elektrische Kriechstromfestigkeit nicht gegeben ist, was zu Signalverfälschung bei der Signalableitung führen kann. Auch ist Lötstopplack bei hohen Temperaturen nahe unterhalb von 280°C nicht dauerhaft temperaturbeständig und kann schmelzen oder verbrennen und so die Funktionsfähigkeit der Auswerteeinheit beinträchtigen.

Das elektrische Verbindungselement 53 ist über mindestens einen elektrischen Signalleiter mit elektronischen Komponenten elektrisch verbunden. Die elektrische Verbindung erfolgt durch Stoffschluss wie Löten, Crimpen, usw.. Von der Elektrodenanordnung 23 abgenommene Signale werden über die Ladungsableitung 23.2 zum elektrischen Verbindungselement 53 der Auswerteeinheit 5 abgeleitet und vom elektrischen Verbindungselement 53 der Auswerteeinheit 5 über den elektrischen Signalleiter zur elektrischen Leiterplatte 51 abgeleitet. Die Signalableitung erfolgt von der Elektrodenanordnung 23 zur Auswerteeinheit 5 nur über Stoffschluss. Vorzugsweise erfolgt die Signalableitung von einem flächigen elektrischen Kontakt des Aufnehmers 22 mit der Elektrodenanordnung 23 zur Auswerteeinheit 5 nur über Stoffschluss. In der Auswerteeinheit 5 können Signale elektrisch verstärkt und auch bereits ausgewertet werden. Vorzugsweise werden in der Auswerteeinheit 5 sowohl Signale und als auch Rückleitungssignale verstärkt und ausgewertet. Die Signale und Rückleitungssignale sind proportional zur Grösse des von der Membran 21 erfassten Druckverlaufs. Verstärkte Signale und Rückleitungssignale oder bereits ausgewertete Signale und Rückleitungssignale werden über das Signalkabel 55 abgeleitet. Vordere Enden der Signalkabel 55 sind mit dem Normaltemperaturbereich 51.2 der elektrischen Leiterplatte 51 elektrisch und mechanisch verbunden. Die elektrische und mechanische Verbindung erfolgt durch Stoffschluss wie Löten, Crimpen, usw.. Bei Kenntnis der vorliegenden Erfindung kann der Fachmann die Ladungsableitung 23.2 auch direkt mit einem elektrischen Signalleiter der elektrischen Leiterplatte 51 mechanisch und elektrisch verbinden, derart, dass für die Signalableitung kein elektrisches Verbindungselement 53 benötigt wird. Auch diese elektrische und mechanische Verbindung erfolgt durch Stoffschluss wie Löten, Crimpen, usw..

Das elektrische Verbindungselement 53 ist hohlzylinderförmig und besteht aus elektrisch leitfähigem Material wie aus Reinmetallen, Nickellegierungen, Kobaltlegierungen, Eisenlegierungen, usw.. Das Material des elektrischen Verbindungselementes 53 weist vorzugsweise einen thermischen Längenausdehnungskoeffizienten im Bereich von 10 bis 18 ppm/°C, vorzugsweise im Bereich von 10 bis 12 ppm/°C auf. Somit ist der thermische Längenausdehnungskoeffizient des elektrischen Verbindungselementes 53 in der Grösse vergleichbar mit demjenigen der Sensoranordnung 2 und/oder der elektrischen Leiterplatte 51.

In der ersten Ausführungsform eines piezoelektrischen Drucksensors 1 nach Fig. 1, 4 bis 6, 10, 12, 13 und 15 bis 17 weist das elektrische Verbindungselement 53 einen buchsenförmigen Adapter 53.0 auf. Der buchsenförmigen Adapter 53.0 ist vorzugsweise geschlitzt. Der buchsenförmige Adapter 53.0 ist im Hochtemperaturbereich 51.1 der elektrischen Leiterplatte 51 angeordnet. Für die Signalableitung ist der buchsenförmige Adapter 53.0 stoffschlüssig mit einem elektrischen Signalleiter der elektrischen Leiterplatte 51 verbunden. Der Stoffschluss erfolgt durch Schweissen, Diffusionsschweissen, Thermokompressionsbonden, Löten, usw.. Zudem ist der buchsenförmige Adapter 53.0 mit der elektrischen Leiterplatte 51 mechanisch verbunden. Die mechanische Verbindung dient sowohl der Befestigung des Adapters 53.0 auf der elektrischen Leiterplatte 51 und als auch der Signalableitung. Vorzugsweise erfolgt die mechanische Verbindung durch Stoffschluss wie Schweissen, Diffusionsschweissen, Thermokompressionsbonden, Löten, usw.. Bei Kenntnis der vorliegenden Erfindung kann der Fachmann die mechanische Verbindung aber auch durch Kraftschluss oder Formschluss realisieren.

In der zweiten Ausführungsform eines piezoelektrischen Drucksensors 1 nach Fig. 2, 7 bis 9 und 11 weist das elektrische Verbindungselement 53 einen ringförmigen Adapter 53.1 und ein Kompensationselement 53.2 auf. Der ringförmige Adapter 53.1 und das Kompensationselement 53.2 sind vorzugsweise einstückig. Das elektrische Verbindungselement 53 erstreckt sich entlang der Längsachse CC'. Der ringförmige Adapter 53.1 ist an einem vorderen Ende des elektrischen Verbindungselementes 53 angeordnet. Das Kompensationselement 53.2 trägt den ringförmigen Adapter 53.1 mechanisch. Vorzugsweise weist das Kompensationselement 53.2 mindestens einen Bogen, wie einen Z-Bogen, einen U-Bogen, einen Lyrabogen, usw. auf. Der Bogen kompensiert Differenzen bei thermischen Längenausdehnungskoeffizienten von signalableitenden Bestandteilen des piezoelektrischen Drucksensors 1. Der Bogen kompensiert auch Fertigungstoleranzen entlang der Längsachse CC' von Bestandteilen der Sensoranordnung 2 und der Auswerteeinheit 5. Im Bereich des Bogens kann sich das Kompensationselement 53.2 ausdehnen oder zusammenziehen und so das Auftreten von thermisch induzierten mechanischen Spannungen und/oder von Fertigungstoleranzen auf unkritische Werte verringern. Das Kompensationselement 53.2 erstreckt sich über den Hochtemperaturbereich 51.1 der elektrischen Leiterplatte 51. Bei Kenntnis der vorliegenden Erfindung kann der Fachmann die beiden Ausführungsformen eines piezoelektrischen Drucksensors auch miteinander kombinieren. So kann der buchsenförmige Adapter der ersten Ausführungsform am vorderen Ende des Kompensationselementes der zweiten Ausführungsform kombiniert werden.

Das Kompensationselement 53.2 erstreckt sich weitgehend über den gesamten Hochtemperaturbereich 51.1 der elektrischen Leiterplatte 51. Für die Signalableitung ist das Kompensationselement 53.2 im Niedertemperaturbereich 51.2 der elektrischen Leiterplatte 51 stoffschlüssig mit einem elektrischen Signalleiter der elektrischen Leiterplatte 51 verbunden. Der Stoffschluss erfolgt durch Schweissen, Diffusionsschweissen, Thermokompressionsbonden, Löten, usw.. Zudem ist das Kompensationselement 53.2 mit der elektrischen Leiterplatte 51 mechanisch verbunden. Für eine Befestigung des Kompensationselementes 53.2 auf der elektrischen Leiterplatte 51 erfolgt die mechanische Verbindung vorzugsweise über Form- und Kraftschluss, in dem mindestens ein Bein des Kompensationselementes 53.2 in mindestens ein entsprechendes Loch im Hochtemperaturbereich 51.1 der elektrischen Leiterplatte 51 gesteckt wird. Das Bein ist elastisch oder plastisch verformbar und wird beim Einstecken in das Loch komprimiert wodurch eine mechanische Vorspannung entsteht, welche das Bein form- und kraftschlüssig hält. Vorzugsweise ist das federförmige Bein eine Bandfeder, mit zwei Federbändern, die an ihrem vorderen und hinteren Ende miteinander verbunden sind und in einem mittleren Bereich voneinander beanstandet sind. Beim Einstecken in das Loch werden die beiden Federbänder im mittleren Bereich elastisch verformt. Bei Kenntnis der vorliegenden Erfindung kann die mechanische Verbindung für die Befestigung des Kompensationselementes 53.2 im Hochtemperaturbereich 51.1 der elektrischen Leiterplatte 51 auch durch Stoffschluss erfolgen. Der Stoffschluss erfolgt durch Schweissen, Diffusionsschweissen, Thermokompressionsbonden, Löten, usw..

Die Ladungsableitung 23.2 ist mit dem elektrischen Verbindungselement 53 zusammengeführt. Das hintere Ende der Ladungsableitung 23.2 ragt auf der Längsachse CC' in den buchsenförmigen Adapter 53.0 oder den ringförmigen Adapter 53.1 hinein. In diesem Bereich sind eine bezüglich der Längsachse CC' äussere Oberfläche der Ladungsableitung 23.2 und eine bezüglich der Längsachse CC' innere Oberfläche des buchsenförmigen Adapters 53.0 oder des ringförmigen Adapters 53.1 elektrisch und mechanisch miteinander verbunden. Die elektrische und mechanische Verbindung erfolgt durch Stoffschluss wie Schweissen, Diffusionsschweissen, Thermokompressionsbonden, Löten, Crimpen, usw.. Die Ladungsableitung 23.2 ist somit bereichsweise im Stoffschluss mit dem elektrischen Verbindungselement 53. Der bereichsweise Stoffschluss kann durch Punktschweissung oder vollumfängliche Linienschweissung erfolgen. Die stoffschlüssige Verbindung verhindert das Auftreten von Mikroreibung, Reibkorrosion, Reibpolymerisation oder den Aufbau einer Oxidschicht an Kontaktoberflächen von Elektroden, Anschlussstellen, Steckverbindungen und Durchführungen im Einsatz des piezoelektrischen Drucksensors 1 und vermeidet Signalverfälschungen wirksam. Bei Kenntnis der vorliegenden Erfindung kann der Fachmann natürlich auch ein anders geformtes elektrisches Verbindungselement 53 verwenden. So kann das elektrische Verbindungselement 53 plattenförmig oder Schalenförmig sein. Die Ladungsableitung 23.2 ragt dann nicht in das elektrische Verbindungselement 53 hinein. Für die Herstellung der elektrischen und mechanischen Verbindung wird die Ladungsableitung 23.2 dann auf das plattenförmige oder Schalenförmige elektrische Verbindungselement 53 gelegt.

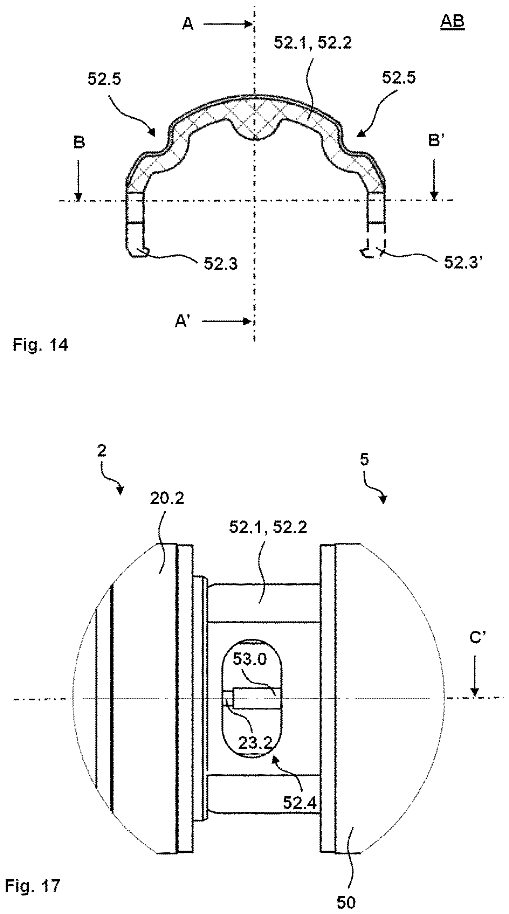

Wie in Fig. 14 dargestellt, ist das Versteifungselement 52.1, 52.2 in der Radialebene AB um die elektrische Leiterplatte 51 herum angeordnet. Das Versteifungselement 52.1, 52.2 ist hohlzylinderförmig und besteht aus thermisch bis zu Temperaturen von mindestens 120°C, vorzugsweise 150°C wärmeformbeständigem, elektrisch isolierendem Material wie Polyetheretherketon (PEEK), Polytetrafluorethylen, Polyimid, Hexafluorpropylenvinylidenfluorid-Copolymer (FKM), usw.. Das Material des Versteifungselementes 52.1, 52.2 weist vorzugsweise einen thermischen Längenausdehnungskoeffizienten im Bereich von 10 bis 50 ppm/°C auf. Das Versteifungselement 52.1, 52.2 umschliesst die elektrische Leiterplatte 51 bereichsweise. Das Versteifungselement 52.1, 52.2 ist in der Radialebene AB zwischen der elektrischen Leiterplatte 51 und dem Auswerteeinheitgehäuse 50 angeordnet. Vorzugsweise umschliesst das Versteifungselement 52.1, 52.2 die elektrische Leiterplatte 51 bereichsweise entlang der Längsachse CC'. Vorzugsweise umschliesst das Versteifungselement 52.1, 52.2 die elektrische Leiterplatte 51 vollständig, worunter in Darstellung nach Fig. 14 eine 360° Umschliessung in der Radialebene AB verstanden wird. In Längsrichtung kann die elektrische Leiterplatte 51 das Versteifungselement 52.1, 52.2 bereichsweise durchdringen. Dafür kann das Versteifungselement 52.1, 52.2 mindestens eine Aussparung aufweisen. Die elektrische Leiterplatte 51 kann durch eine solche Aussparung von aussen auch bereichsweise sichtbar und zugänglich sein.

Das Versteifungselement 52.1, 52.2 ist mehrteilig und besteht aus mindestens zwei Schalen 52.1, 52.2. Die Schalen 52.1, 52.2 sind gleichartig. Vorzugsweise sind die Schalen 52.1, 52.2 Gleichteile, was die Herstellkosten senkt. Die Schalen 52.1, 52.2 lassen sich mechanisch mit der elektrischen Leiterplatte 51 und/oder mechanisch miteinander verbinden. Die mechanische Verbindung kann über Formschluss und/oder Stoffschluss und/oder Kraftschluss erfolgen. Die mechanische Verbindung kann reversibel oder irreversibel lösbar sein. Vorzugsweise lassen sich die beiden Schalen 52.1, 52.2 über mindestens ein vorstehendes Einrastelement 52.3, 52.3' mechanisch mit der elektrischen Leiterplatte 51 und/oder miteinander verbinden. Vorzugsweise rastet ein Einrastelement 52.3, 52.3' der einen Schale 52.1, 52.2 in eine entsprechende Öffnung der anderen Schale 52.1, 52.2 ein. Vorzugsweise rastet ein Einrastelement 52.3, 52.3' der einen Schale 52.1, 52.2 durch eine entsprechende Öffnung der anderen Schale 52.1, 52.2 in der elektrischen Leiterplatte 51 ein. Vorzugsweise sind die Schalen 52.1, 52.2 bezüglich der Vertikalachse AA' nicht spiegelsymmetrisch. Im Querschnitt der Schale 52.1, 52.2 nach Fig. 14 sind die beiden vorstehenden Einrastelement 52.3, 52.3' der Schale 52.1, 52.2 links und rechts der Vertikalachse AA' angeordnet. Entlang der Längsachse CC' sind die beiden Einrastelemente 52.3, 52.3' nicht in der gleichen Radialebene AB angeordnet, das rechte Einrastelement 52.3' ist deshalb auch gestrichelt dargestellt. Die elektrische Leiterplatte 51 ist somit zwischen den beiden Schalen 52.1, 52.2 angeordnet. Das Versteifungselement 52.1, 52.2 weist im Verbindungsbereich zwischen der Ladungsableitung 23.2 und dem elektrischen Verbindungselement 53 mindestens ein Fenster 52.4 auf. Durch das Fenster 52.4 sind die Ladungsableitung 23.2 und das elektrische Verbindungselement 53 von aussen zugänglich und mit einem Fügewerkzeug erreichbar. Alternativ ist das Versteifungselement 52.1, 52.2 einteilig. Das einteilige Versteifungselement 52.1, 52.2 wird in Längsrichtung über die elektrische Leiterplatte 51 geschoben oder es wird in Radialrichtung mittels Biegelager über die elektrische Leiterplatte 51 geklappt.

Das Versteifungselement 52.1, 52.2 versteift die elektrische Leiterplatte 51 mechanisch gegen mechanische Resonanzschwingungen in der Radialebene AB und/oder entlang der Längsachse CC'. Im Einsatz des piezoelektrischen Drucksensors 1 ist die elektrische Leiterplatte 51 durch Motorvibrationen zu mechanischen Schwingungen anregbar. Die elektrische Leiterplatte 51 ist ein schwingfähiges System. Die Motorvibrationen weisen ein breites Band mit Frequenzen auf. Resonanzfrequenzen sind solche Frequenzen der Motorvibrationen, bei denen eine Amplitude des schwingungsfähigen Systems grösser ist als bei Anregung durch benachbarte Frequenzen der Motorvibrationen. Resonanzschwingungen sind Schwingungen der elektrischen Leiterplatte 51 mit Resonanzfrequenzen. Vorzugsweise fixiert das Versteifungselement 52.1, 52.2 die elektrische Leiterplatte 51 in ihrer Bewegungsfreiheit in der Radialebene AB gegenüber dem Auswerteeinheitgehäuse 50. Unter Fixieren wird ein Festhalten, eine Unbeweglichkeit der elektrischen Leiterplatte 51 relativ zum Auswerteeinheitgehäuse 50 verstanden. Vorzugsweise bildet die zwischen den Schalen 52.1, 52.2 angeordnete und mit den Schalen 52.1, 52.2 mechanisch verbundene elektrische Leiterplatte 51 einen gegen mechanische Resonanzschwingungen in der Radialebene AB und/oder entlang der Längsachse CC' steifen Körper. Das Versteifungselement 52.1, 52.2 ist im linienförmigen oder flächigen mechanischen Kontakt mit der elektrischen Leiterplatte 51. Beim Einsatz des piezoelektrischen Drucksensors 1 auftretende Motorvibrationen können die derart versteifte elektrische Leiterplatte 51 nur noch vermindert zu mechanischen Resonanzschwingungen in der Radialebene AB und/oder entlang der Längsachse CC' anregen, was die mechanische Belastung der an der Signalableitung beteiligten Bestandteile des piezoelektrischen Drucksensors 1 im Bereich der elektrischen Leiterplatte 51 dauerhaft reduziert.

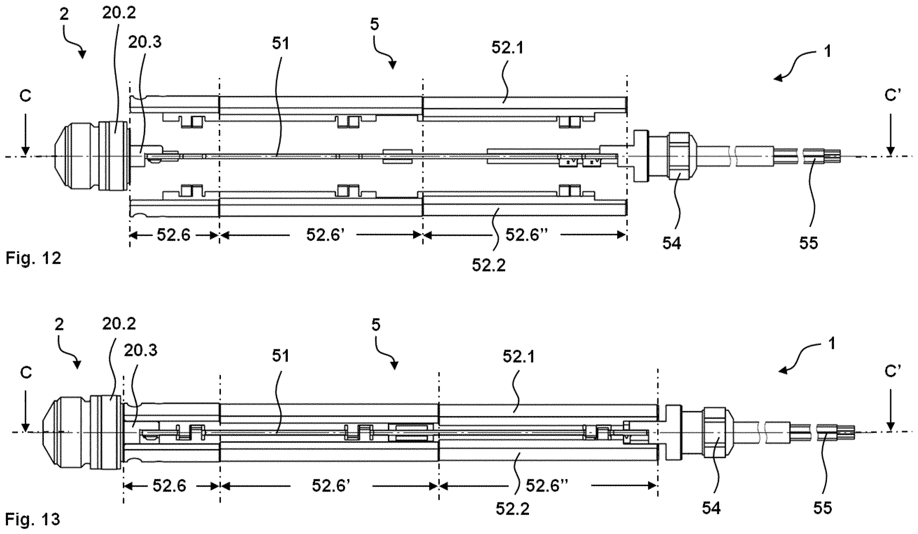

Eine zusätzliche Versteifung der elektrischen Leiterplatte 51 gegen Biegebelastungen entlang der Längsrichtung und/oder entlang der Radialrichtung erfolgt durch eine Pressverbindung vom Auswerteeinheitgehäuse 50 auf dem Versteifungselement 52.1, 52.2. Dabei presst das Auswerteeinheitgehäuse 50 das Versteifungselement 52.1, 52.2 bereichsweise auf die elektrische Leiterplatte 51. Auch werden durch die Pressverbindung die Ladungsableitung 23.2 und das elektrische Verbindungselement 53 mechanisch starr im Fenster 52.4 positioniert. Das Auswerteeinheitgehäuse 50 ist entlang der Längsachse CC' über das Versteifungselement 52.1, 52.2 schiebbar. Das Versteifungselement 52.1, 52.2 weist entlang der Längsachse CC' mehrere Bereiche 52.6, 52.6', 52.6" auf. In der Ausführungsform nach Fig. 12 und 13 weist das Versteifungselement 52.1, 52.2 drei Bereiche 52.6, 52.6', 52.6" auf. Vorzugsweise ist jeder Bereich 52.6, 52.6', 52.6" entlang der Längsachse CC' 30mm lang, vorzugsweise 60mm lang, vorzugsweise 90mm lang. Das Auswerteeinheitgehäuse 50 ist entlang der Längsachse CC' von einem hinteren Bereich 52.6" zu einem mittleren Bereich 52.6' und vom mittleren Bereich 52.6' zu einem vorderen Bereich 52.6 über das Versteifungselement 52.1, 52.2 schiebbar. Vorzugsweise weist das Versteifungselement 52.1, 52.2 im hinteren Bereich 52.6", im mittleren Bereich 52.6' und im vorderen Bereich 52.6 unterschiedliche Aussendurchmesser auf. Vorzugsweise erstrecken sich die Bereiche 52.6, 52.6', 52.6" jeweils über 33% der Länge der elektrischen Leiterplatte 51. In Längsrichtung ist der Aussendurchmesser des Versteifungselementes 52.1, 52.2 somit bereichsweise gestuft. Ein Aussendurchmesser des hinteren Bereiches 52.6" des Versteifungselementes 52.1, 52.2 ist kleiner/gleich dem Innendurchmesser des Auswerteeinheitgehäuses 50. Das Auswerteeinheitgehäuse 50 ist leichtgängig per Hand über das Versteifungselement 52.1, 52.2 schiebbar. Ein Aussendurchmesser des mittleren Bereiches 52.6' des Versteifungselementes 52.1, 52.2 hat ein kleines Übermass verglichen mit dem Innendurchmesser des Auswerteeinheitgehäuses 50. Bei kleinem Übermass ist das Auswerteeinheitgehäuse 50 per Hand über das Versteifungselement 52.1, 52.2 schiebbar. Ein Aussendurchmesser des vorderen Bereiches 52.6 des Versteifungselementes 52.1, 52.2 hat ein grösseres Übermass verglichen mit dem Innendurchmesser des Auswerteeinheitgehäuses 50. Bei grösserem Übermass ist das Auswerteeinheitgehäuse 50 nicht mehr per Hand über das Versteifungselement 52.1, 52.2 schiebbar. Die Übermasse sind materialspezifisch so gewählt, dass die Pressverbindung zulässige mechanische Spannungen nicht überschritten werden. Bei Kenntnis der vorliegenden Erfindung kann der Fachmann das Versteifungselement auch ohne einen mittleren Bereich mit nur einem vorderen Bereich und einem hinteren Bereich realisieren. Auch kann der Fachmann ein Versteifungselement mit einem ungestuften Aussendurchmesser realisieren, bei dem der Aussendurchmesser weitgehend kontinuierlich vom hinteren Bereich zum vorderen Bereich ansteigt.

Das Versteifungselement 52.1, 52.2 isoliert die elektrische Leiterplatte 51 elektrisch gegenüber dem Auswerteeinheitgehäuse 50.

Das Versteifungselement 52.1, 52.2 weist mindestens eine Biegezone 52.5 zur Kompensation von Differenzen bei thermischen Längenausdehnungskoeffizienten zwischen der elektrischen Leiterplatte 51, dem Versteifungselement 52.1, 52.2 und/oder dem Auswerteeinheitgehäuse 50 auf. Die Biegezone 52.5 ist als Nute in Längsrichtung ausgebildet. Im Bereich der Biegezone 52.5 kann sich das Versteifungselement 52.1, 52.2 elastisch ausdehnen oder zusammenziehen und so thermisch induzierte mechanische Spannungen auf unkritische Werte verringern, insbesondere lässt sich so eine für seine Funktionsfähigkeit nachteilige plastische Verformung des Versteifungselementes 52.1, 52.2 vermeiden. Bei Kenntnis der vorliegenden Erfindung kann der Fachmann die Biegezone auch in der Ausführung mindestens einer Aussparung im Material des Versteifungselementes 52.1, 52.2, oder als Festkörpergelenk, usw.. realisieren. Das Versteifungselement 52.1, 52.2 dämpft die Ausbreitung von Motorvibrationen vom Sensorflansch 20.2 und vom Auswerteeinheitgehäuse 50 auf die elektrische Leiterplatte 51, so dass die Motorvibrationen in ihrer Stärke gedämpft auf die elektrische Leiterplatte 51 gelangen, was die mechanische Belastung der an der Signalableitung beteiligten Bestandteile des piezoelektrischen Drucksensors 1 im Bereich der elektrischen Leiterplatte 51 dauerhaft reduziert.

Ein hinterer Bereich des Sensorflansches 20.2 ist vollumfänglich mit einem vorderen Rand des Auswerteeinheitgehäuses 50 mechanisch verbunden. Die mechanische Verbindung erfolgt durch Stoffschluss wie Schweissen, Diffusionsschweissen, Thermokompressionsbonden, Löten, usw.. Ein hinterer Bereich des Sensorflansches 20.2 weist einen Sensorgehäuserahmen 20.3 auf. Vorzugsweise sind Sensorflansch 20.2 und Sensorgehäuserahmen 20.3 einstückig. Der Sensorgehäuserahmen 20.3 besteht aus mindestens einer parallel zur Längsachse CC' orientierten Strebe. Wie in Fig. 10 und 11 dargestellt besteht der Sensorgehäuserahmen 20.3 vorzugsweise aus zwei Streben. Ein vorderes Ende der elektrischen Leiterplatte 51 ist mit der Strebe mechanisch verbunden. Die mechanische Verbindung erfolgt vorzugsweise durch Kraftschluss, in dem die elektrische Leiterplatte 51 über eine Schraube mit einem Innengewinde der Strebe verschraubt ist. Die mechanische Verbindung ist auch eine elektrische Verbindung. Vorzugsweise ist die Schraube über mindestens eine Unterlegscheibe mechanisch mit der elektrischen Leiterplatte 51 verbunden. Die Unterlegscheibe bildet einen elektrischen Kontakt zwischen der Strebe, der Schraube und mindestens einem elektrischen Signalleiter der elektrischen Leiterplatte 51. Die Unterlegscheibe und die Schraube sind aus elektrisch leitfähigem Material wie aus Reinmetallen, Nickellegierungen, Kobaltlegierungen, Eisenlegierungen, usw.. Die elektrische Verbindung über zwei Streben ist redundant. Vom Sensorflansch 20.2 abgenommene Rückleitungssignale werden über den Sensorgehäuserahmen 20.3 zu einem elektrischen Signalleiter der elektrischen Leiterplatte 51 abgeleitet. Die Signalableitung der Rückleitungssignale erfolgt vom Sensorflansch 20.2 zur Auswerteeinheit 5 nur über stoffschlüssige und kraftschlüssige Verbindungen. Der Kraftschluss zwischen den Streben und der elektrischen Leiterplatte 51 über Schrauben und Unterlegscheiben dämpft von Motorvibrationen herrührende mechanische Resonanzschwingungen entlang der Längsachse CC'.

Entsprechend weist ein vorderer Bereich des Signalkabelflansches 54 mindestens eine Strebe auf. Vorzugsweise weist der vordere Bereich des Signalkabelflansches 54 zwei Streben auf. Ein hinteres Ende der elektrischen Leiterplatte 51 ist mit der Strebe des Signalkabelflansches 54 mechanisch verbunden. Auch hier erfolgt die mechanische Verbindung vorzugsweise durch Kraftschluss, in dem die elektrische Leiterplatte 51 über eine Schraube mit einem Innengewinde der Strebe verschraubt ist.

Die Fig. 12, 13, 15 und 16 zeigen Schritte des Verfahrens zur Herstellung des piezoelektrischen Drucksensors 1. Die Sensoranordnung 2 nach Fig. 3 und die Auswerteeinheit 5 werden als separate Halbzeuge hergestellt. Dies hat den Vorteil, dass Varianten der Sensoranordnung 2 mit Varianten der Auswerteeinheit 5 zu einem piezoelektrischen Drucksensors 1 herstellbar sind, wodurch die Herstellung kostengünstig ist. Varianten der Sensoranordnung 2 umfassen Membrane 21 mit verschiedenen Membranstärken, und/oder piezoelektrische Aufnehmer 22 mit verschiedenen Einsatztemperaturbereichen. Varianten der Auswerteeinheit 5 umfassen elektrische Leiterplatten 51 mit verschiedenen Einsatztemperaturbereichen, und/oder unterschiedliche Signalarten wie elektrisch unverstärkte elektrische Polarisationsladungen, elektrisch verstärkte elektrische Polarisationsladungen, elektrische Spannungen, usw..

Die Sensoranordnung 2 weist die in der Sensorgehäuseanordnung 20 angeordnete Membran 21, den piezoelektrischen Aufnehmer 22, die Elektrodenanordnung 23 und den elektrischen Isolationskörper 25 auf. Die Auswerteeinheit 5 weist das Auswerteeinheitgehäuse 50, die elektrische Leiterplatte 51, das Versteifungselement 52.1, 52.2, das elektrische Verbindungselement 53, den Signalkabelflansch 54 und das Signalkabel 55 auf. Das Signalkabel 55 ist über den Signalkabelflansch 54 mit der Auswerteeinheit 5 verbunden. Bei Kenntnis der vorliegenden Erfindung kann der Fachmann anstelle eines Signalkabelflansches auch eine elektrische Steckverbindung wie einen Signalkabelstecker, usw. verwenden, um das Signalkabel mit der Auswerteeinheit zu verbinden.

In einem ersten Verfahrensschritt werden die Ladungsableitung 23.2 und das elektrische Verbindungselement 53 zusammengeführt. Dazu wird das hintere Ende der Ladungsableitung 23.2 auf der Längsachse CC' in das elektrische Verbindungselement 53 geschoben, so dass das hintere Ende der Ladungsableitung 23.2 in das elektrische Verbindungselement 53 hineinragt und die bezüglich der Längsachse CC' äussere Oberfläche der Ladungsableitung 23.2 und die bezüglich der Längsachse CC' innere Oberfläche des elektrischen Verbindungselementes 53 bereichsweise im mechanischen Kontakt sind.

In einem anderen Verfahrensschritt wird das vordere Ende der elektrischen Leiterplatte 51 mit dem Sensorgehäuserahmen 20.3 mechanisch verbunden. Die mechanische Verbindung erfolgt durch Kraftschluss, in dem die elektrische Leiterplatte 51 über Schrauben mit Innengewinden von Streben des Sensorgehäuserahmens 20.3 verschraubt wird.

In einem folgenden Verfahrensschritt wird das Versteifungselement 52.1, 52.2 mechanisch mit der elektrischen Leiterplatte 51 und/oder miteinander verbunden. Dieser Form- und/oder Kraftschluss ist in Fig. 12 und 13 dargestellt. Vorzugsweise werden mehrere Einrastelemente 52.3, 52.3' des einen Versteifungselementes 52.1, 52.2 in entsprechende Öffnungen des anderen Versteifungselementes 52.1, 52.2 eingerastet und versteift die elektrische Leiterplatte 51 mechanisch gegen Biegebelastungen entlang der Längsachse CC' und/oder entlang der Horizontalachse BB'.

In einem weiteren Verfahrensschritt wird wie in Fig. 15 dargestellt das Auswerteeinheitgehäuse 50 entlang der Längsachse CC' gegen den Sensorflansch 20.2 verschoben. Dabei wird das Versteifungselement 52.1, 52.2 vom Auswerteeinheitgehäuse 50 auf die elektrische Leiterplatte 51 gepresst. Diese Pressverbindung versteift die elektrische Leiterplatte 51 mechanisch zusätzlich gegen Biegebelastungen entlang der Längsachse CC' und/oder entlang der Horizontalachse BB'.

Darauf folgend werden in einem Verfahrensschritt die äussere Oberfläche der Ladungsableitung 23.2 und die innere Oberfläche des elektrischen Verbindungselementes 53 bereichsweise elektrisch und mechanisch miteinander verbunden. Die elektrische und mechanische Verbindung erfolgt durch Stoffschluss wie Schweissen, Diffusionsschweissen, Thermokompressionsbonden, Löten, usw.. Ein Fügewerkzeug stellt durch das Fenster 52.4 des Versteifungselementes 52.1, 52.2 den Stoffschluss zwischen der Ladungsableitung 23.2 und dem elektrischen Verbindungselement 53 her. Das Fügewerkzeug ist in Fig. 15 nicht dargestellt. Das Fügewerkzeug kann aus Elektroden einer elektrischen Widerstandsschweissanlage bestehen, es kann aber auch ein Crimpwerkzeug, ein Laser, usw. sein. Damit dass Fügewerkzeug durch das Fenster 52.4 des Versteifungselementes 52.1, 52.2 den Stoffschluss herstellen kann, ist das Auswerteeinheitgehäuse 50 auf der Längsachse CC' vom Sensorflansch 20.2 beabstandet.

In einem noch weiteren Verfahrensschritt wird das Auswerteeinheitgehäuse 50 entlang der Längsachse CC' vollständig gegen den Sensorflansch 20.2 verschoben, so dass wie in Fig. 16 dargestellt der vordere Rand des Auswerteeinheitgehäuses 50 mit dem hinteren Rand des Sensorflansches 20.2 im mechanischen Kontakt ist und von aussen zugänglich ist. Dieses Verschieben des Auswerteeinheitgehäuses 50 ist in Fig. 16 durch einen Pfeil dargestellt. Dadurch ist der hintere Bereich des Sensorflansches 20.2 mit dem vorderen Rand des Auswerteeinheitgehäuses 50 weitgehend bündig und von aussen zugänglich, während nun das Versteifungselement 52.1, 52.2 verdeckt ist.

In einem folgenden Verfahrensschritt wird das Auswerteeinheitgehäuse 50 bereichsweise mit dem Sensorflansch 20.2 verbunden. Vorzugsweise wird der vordere Rand des Auswerteeinheitgehäuses 50 mit dem hinteren Rand des Sensorflansches 20.2 vollumfänglich mechanisch miteinander verbunden. Die mechanische Verbindung erfolgt durch Stoffschluss wie Schweissen, Diffusionsschweissen, Thermokompressionsbonden, Löten, usw.. Ein Fügewerkzeug stellt den Stoffschluss zwischen dem vorderen Rand des Auswerteeinheitgehäuses 50 und dem hinteren Rand des Sensorflansches 20.2 her. Das Fügewerkzeug ist in Fig. 16 nicht dargestellt.

In noch einem weiteren Verfahrensschritt wird das Auswerteeinheitgehäuse 50 bereichsweise mit dem Signalkabelflansch 54 mechanisch verbunden. Vorzugsweise wird der hintere Bereich des Auswerteeinheitgehäuses 50 vollumfänglich mit einem vorderen Rand des Signalkabelflansches 54 mechanisch verbunden. Die mechanische Verbindung erfolgt durch Stoffschluss wie Schweissen, Diffusionsschweissen, Thermokompressionsbonden, Löten, usw.. Ein Fügewerkzeug stellt den Stoffschluss zwischen dem hinteren Bereich des Auswerteeinheitgehäuses 50 und dem vorderen Rand des Signalkabelflansches 54 her. Das Fügewerkzeug ist in Fig. 16 nicht dargestellt.

Bei Kenntnis der vorliegenden Erfindung kann der Fachmann einen piezoelektrischen Drucksensor realisieren, bei dem alle bei der Ableitung der Signale direkt beteiligten Bestandteile des piezoelektrischen Drucksensors über Stoffschluss miteinander verbunden sind. Auch kann er einen piezoelektrischen Drucksensor realisieren, bei dem alle mechanischen Verbindungen zwischen seinen Bestandteilen stoffschlüssige Verbindungen sind.

### Bezugszeichenliste

- A, B, C: vergrösserter Bereich
- AA', BB', CC': Achse
- AB: Radialebene
- 1: Drucksensor
- 2: Sensoranordnung
- 5: Auswerteeinheit
- 20: Sensorgehäuseanordnung
- 20.1: Dichtkonus
- 20.2: Sensorflansch
- 20.3: Sensorgehäuserahmen
- 21: Membran
- 22: Aufnehmer
- 22.1, 22.3: Auflageelement
- 22.2: piezoelektrisches Aufnehmerelement
- 23: Elektrodenanordnung
- 23.1: Ladungsabgriff
- 23.2: Ladungsableitung
- 25: elektrischer Isolationskörper
- 26: Kompensationselement
- 50: Auswerteeinheitgehäuse
- 51: elektrische Leiterplatte
- 51.1: Hochtemperaturbereich
- 51.2: Normaltemperaturbereich
- 52.1, 52.2: Versteifungselement
- 52.3, 52.3': Einrastelement
- 52.4: Fenster
- 52.5: Biegezone
- 52.6, 52.6', 52.6": Bereich
- 53: elektrisches Verbindungselement
- 53.0: buchsenförmiger Adapter
- 53.1: ringförmiger Adapter
- 53.2: Kompensationselement
- 54: Signalkabelflansch
- 55: Signalkabel

## Patentansprüche

1. Drucksensor (1) mit einer Sensoranordnung (2) und einer Auswerteeinheit (5); welche Sensoranordnung (2) einen Aufnehmer (22) und eine Elektrodenanordnung (23) aufweist; welcher Aufnehmer (22) unter der Wirkung eines Druckverlaufes Signale erzeugt; und welche Elektrodenanordnung (23) die Signale an die Auswerteeinheit (5) ableitet; wobei die Auswerteeinheit (5) ein Auswerteeinheitgehäuse (50), eine elektrische Leiterplatte (51) und ein Versteifungselement (52.1, 52.2) aufweist; das Versteifungselement (52.1, 52.2) in einer Radialebene (AB) zwischen der elektrischen Leiterplatte (51) und dem Auswerteeinheitgehäuse (50) angeordnet ist; das Versteifungselement (52.1, 52.2) hohlzylinderförmig ist; das Versteifungselement (52.1, 52.2) mit der elektrischen Leiterplatte (51) mechanisch verbunden ist; das Versteifungselement (52.1, 52.2) in der Radialebene (AB) bereichsweise um die elektrische Leiterplatte (51) herum angeordnet ist; **dadurch gekennzeichnet, dass** das Versteifungselement (52.1, 52.2) aus mindestens zwei gleichartige Schalen (52.1, 52.2) besteht, welche Schalen (52.1, 52.2) mechanisch mit der elektrischen Leiterplatte (51) und/oder mechanisch miteinander verbindbar sind; und dass das Versteifungselement (52.1, 52.2) die elektrische Leiterplatte (51) im linienförmigen oder flächigen mechanischen Kontakt umschliesst, wodurch das Versteifungselement (52.1, 52.2) in Radialebene (AB) auftretende mechanische Resonanzschwingungen der elektrischen Leiterplatte (51) dämpft.

2. Drucksensor (1) nach Anspruch 1, **dadurch gekennzeichnet, dass** der Drucksensor (1) ein piezoelektrischer Drucksensor (1) ist; dass der Aufnehmer (22) ein piezoelektrischen Aufnehmer (22) ist; dass der piezoelektrische Aufnehmer (22) unter der Wirkung eines Druckverlaufes piezoelektrische Ladungen erzeugt; und dass die Elektrodenanordnung (23) die piezoelektrischen Ladungen vom piezoelektrischen Aufnehmer (22) abgreift und die abgegriffenen piezoelektrischen Ladungen als Signale an die Auswerteeinheit (5) ableitet.

3. Drucksensor (1) nach einem der Ansprüche 1 oder 2, **dadurch gekennzeichnet, dass** das Versteifungselement (52.1, 52.2) die elektrische Leiterplatte (51) bereichsweise entlang einer Längsachse (CC') umschliesst.

4. Drucksensor (1) nach einem der Ansprüche 1 oder 2, **dadurch gekennzeichnet, dass** das Versteifungselement (52.1, 52.2) die elektrische Leiterplatte (51) in der Radialebene (AB) vollständig umschliesst.

5. Drucksensor (1) nach einem der Ansprüche 1 bis 4, **dadurch gekennzeichnet, dass** das Versteifungselement (52.1, 52.2) die elektrische Leiterplatte (51) in ihrer Bewegungsfreiheit in der Radialebene (AB) gegenüber dem Auswerteeinheitgehäuse (50) fixiert.

6. Drucksensor (1) nach Anspruch 1, **dadurch gekennzeichnet, dass** die Schalen (52.1, 52.2) über mindestens ein vorstehendes Einrastelement (52.3, 52.3') mechanisch mit der elektrischen Leiterplatte (51) verbindbar sind; dass ein Einrastelement (52.3, 52.3') der einen Schale (52.1, 52.2) durch eine entsprechende Öffnung der anderen Schale (52.1, 52.2) in der elektrischen Leiterplatte (51) einrastet; und dass die elektrische Leiterplatte (51) in der Radialebene (AB) zwischen den Schalen (52.1, 52.2) angeordnet ist.

7. Drucksensor (1) nach Anspruch 1, **dadurch gekennzeichnet, dass** die Schalen (52.1, 52.2) über mindestens ein vorstehendes Einrastelement (52.3, 52.3') mechanisch miteinander verbindbar sind; dass ein Einrastelement (52.3, 52.3') der einen Schale (52.1, 52.2) in eine entsprechende Öffnung der anderen Schale (52.1, 52.2) einrastet; und dass die elektrische Leiterplatte (51) in der Radialebene (AB) zwischen den Schalen (52.1, 52.2) angeordnet ist.

8. Drucksensor (1) nach einem der Ansprüche 1 bis 7, **dadurch gekennzeichnet, dass** das die Auswerteinheit (5) ein Auswerteeinheitgehäuse (50) aufweist; und dass das Auswerteeinheitgehäuse (50) das Versteifungselement (52.1, 52.2) bereichsweise auf die elektrische Leiterplatte (51) presst.

9. Drucksensor (1) nach Anspruch 8, **dadurch gekennzeichnet, dass** das Versteifungselement (52.1, 52.2) entlang einer Längsrichtung mehrere Bereiche (52.6, 52.6', 52.6") aufweist; und dass jeder Bereich (52.6, 52.6', 52.6") entlang der Längsrichtung 30mm lang, vorzugsweise 60mm lang, vorzugsweise 90mm lang ist.

10. Drucksensor (1) nach Anspruch 8, **dadurch gekennzeichnet, dass** das Auswerteeinheitgehäuse (50) entlang der Längsrichtung von einem hinteren Bereich (52.6") zu einem vorderen Bereich (52.6) über das Versteifungselement (52.1, 52.2) schiebbar ist; und dass das Versteifungselement (52.1, 52.2) im hinteren Bereich (52.6") und im vorderen Bereich (52.6) unterschiedliche Aussendurchmesser aufweist.

11. Drucksensor (1) nach Anspruch 8, **dadurch gekennzeichnet, dass** das Auswerteeinheitgehäuse (50) entlang der Längsrichtung von einem hinteren Bereich (52.6") zu einem mittleren Bereich (52.6') und vom mittleren Bereich (52.6') zu einem vorderen Bereich (52.6) über das Versteifungselement (52.1, 52.2) schiebbar ist; dass das Versteifungselement (52.1, 52.2) im hinteren Bereich (52.6"), im mittleren Bereich (52.6') und im vorderen Bereich (52.6) unterschiedliche Aussendurchmesser aufweist; dass ein Aussendurchmesser des mittleren Bereiches (52.6') ein kleines Übermass verglichen mit einem Innendurchmesser des Auswerteeinheitgehäuses (50) hat; und dass bei kleinem Übermass das Auswerteeinheitgehäuse (50) per Hand über das Versteifungselement (52.1, 52.2) schiebbar ist.

12. Drucksensor (1) nach einem der Ansprüche 10 oder 11, **dadurch gekennzeichnet, dass** ein Aussendurchmesser des vorderen Bereiches (52.6) ein grösseres Übermass verglichen mit dem Innendurchmesser des Auswerteeinheitgehäuses (50) hat und dass bei grösserem Übermass das Auswerteeinheitgehäuse (50) nicht per Hand über das Versteifungselement (52.1, 52.2) schiebbar ist.

13. Drucksensor (1) nach einem der Ansprüche 1 bis 12, **dadurch gekennzeichnet, dass** das Versteifungselement (52.1, 52.2) mindestens eine Biegezone (52.5) zur Kompensation von Differenzen bei thermischen Längenausdehnungskoeffizienten zwischen der elektrischen Leiterplatte (51), dem Versteifungselement (52.1, 52.2) und/oder einem Auswerteeinheitgehäuse (50) der Auswerteeinheit (5) aufweist.

## Claims

1. A pressure sensor (1) comprising a sensor assembly (2) and an evaluation unit (5); wherein said sensor assembly (2) comprises a sensor (22) and an electrode arrangement (23); wherein said sensor (22) generates signals under the action of a pressure profile; and said electrode arrangement (23) transmits said signals to the evaluation unit(5); wherein
the evaluation unit (5) comprises an evaluation unit housing (50), an electric circuit board (51), and a reinforcement element (52.1, 52.2), said reinforcement element (52.1, 52.2) being disposed in a radial plane (AB) between the electric circuit board (51) and the evaluation unit housing (50); said reinforcement element (52.1, 52.2) being formed as a hollow cylinder; said reinforcement element (52.1, 52.2) being mechanically connected to the electric circuit board (51); said reinforcement element (52.1, 52.2) being arranged around the electric circuit board (51) in areas within said radial plane (AB); **characterized in that** the reinforcement element (52.1, 52.2) consists of at least two identical shells (52.1, 52.2); said shells (52.1, 52.2) being mechanically connectable to the electric circuit board (51) and/or mechanically connectable to each other; and **in that** the reinforcement element (52.1, 52.2) encloses the electric circuit board (51) by making a mechanical contact to the surface thereof in a linear fashion or over a wider surface area whereby the reinforcement element (52.1, 52.2) dampens mechanical resonance vibrations of the electric circuit board (51) that occur in the radial plane (AB).

2. The pressure sensor (1) according to claim 1, **characterized in that** the pressure sensor (1) is a piezoelectric pressure sensor; said sensor (22) is a piezoelectric sensor (22); said sensor (22) produces piezoelectric charges under the action of a pressure profile; and the electrode arrangement (23) receives the piezoelectric charges produced by the piezoelectric sensor (22) and transmits the received piezoelectric charges as signals to the evaluation unit (5).

3. The pressure sensor (1) according to any of claims 1 or 2, **characterized in that** the reinforcement element (52.1, 52.2) encloses the electric circuit board (51) in areas along a longitudinal axis (CC').

4. The pressure sensor (1) according to any of claims 1 or 2, **characterized in that** the reinforcement element (52.1, 52.2) completely encloses the electric circuit board (51) in the radial plane (AB).

5. The pressure sensor (1) according to any of claims 1 to 4, **characterized in that** the reinforcement element (52.1, 52.2) fixes the electric circuit board (51) in its mobility in the radial plane (AB) relative to the evaluation unit housing (50).

6. The pressure sensor (1) according to claim 1, **characterized in that** the shells (52.1, 52.2) can be mechanically connected to the electric circuit board (51) via at least one protruding locking element (52.3, 52.3'); wherein a locking element (52.3, 52.3') of one of the shells (52.1, 52.2) engages the electric circuit board (51) through a respective opening of the other shell (52.1, 52.2); and the electric circuit board (51) is arranged between the shells in the radial plane (AB).

7. The pressure sensor (1) according to claim 1, **characterized in that** the shells (52.1, 52.2) can be mechanically connected to each other via at least one protruding locking element (52.3, 52.3'); wherein a locking element (52.3, 52.3') of one of the shells (52.1, 52.2) engages a respective opening of the other shell (52.1, 52.2); and the electric circuit board (51) is arranged between the shells in the radial plane (AB).

8. The pressure sensor (1) according to any of claims 1 to 7, **characterized in that** the evaluation unit (5) comprises an evaluation unit housing (50); and the evaluation unit housing (50) presses the reinforcement element (52.1, 52.2) in areas onto the electric circuit board (51).

9. The pressure sensor (1) according to claim 8, **characterized in that** the reinforcement element (52.1, 52.2) comprises a plurality of zones (52.6, 52.6', 52.6'') along a longitudinal direction; and each zone (52.6, 52.6', 52.6") has a length of 30 mm, preferably 60 mm, preferentially 90 mm, along the longitudinal direction.

10. The pressure sensor (1) according to claim 8, **characterized in that** the evaluation unit housing (50) is slidable over the reinforcement element (52.1, 52.2) in the longitudinal direction from a rear zone (52.6'') to a front zone (52.6); and the reinforcement element (52.1, 52.2) has different outer diameters in said rear zone (52.6'') and in said front zone (52.6).

11. The pressure sensor (1) according to claim 8, **characterized in that** the evaluation unit housing (50) is slidable over the reinforcement element (52.1, 52.2) in the longitudinal direction from a rear zone (52.6'') to a central zone (52.6') and from the central zone (52.6') to a front zone (52.6); wherein the reinforcement element (52.1, 52.2) has different outer diameters in said rear zone (52.6''), in said central zone (52.6') and in said front zone (52.6); wherein an outer diameter of the central zone (52.6') has a slight oversize compared to the inner diameter of the evaluation unit housing (50); and in the case of the slight oversize the evaluation unit housing (50) is manually slidable over the reinforcement element (52.1, 52.2).

12. The pressure sensor (1) according to any of claims 10 or 11, **characterized in that** an outer diameter of the front zone of the reinforcement element (52.1, 52.2) has a larger oversize compared to the inner diameter of the evaluation unit housing (50), and in the case of the larger oversize the evaluation unit housing (50) is not manually slidable over the reinforcement element.

13. The pressure sensor (1) according to any of claims 1 to 12, **characterized in that** the reinforcement element (52.1, 52.2) comprises at least one bending zone for compensating differences in the thermal coefficients of linear expansion between the electric circuit board (51), the reinforcement element (52.1, 52.2) and/or an evaluation unit housing (50) of the evaluation unit (5).

## Revendications

1. Capteur de pression (1) comprenant un ensemble capteur (2) et une unité d'évaluation (5); dans lequel ledit ensemble capteur (2) comprend un capteur (22) et un agencement d'électrodes (23); dans lequel ledit capteur (22) génère des signaux sous l'impact d'un profil de pression; et ledit agencement d'électrodes (23) transmet lesdits signaux à l'unité d'évaluation (5); où
l'unité d'évaluation (5) comprend un boîtier d'unité d'évaluation (50), une carte de circuit électrique (51) et un élément de renforcement (52.1, 52.2), ledit élément de renforcement (52.1, 52.2) étant disposé entre la carte de circuit électrique (51) et le boîtier d'unité d'évaluation (50) dans un plan radial (AB); ledit élément de renforcement (52.1, 52.2) étant en forme d'un cylindre creux; ledit élément de renforcement (52.1, 52.2) étant connecté mécaniquement à la carte de circuit électrique (51); ledit élément de renforcement (52.1, 52.2) étant agencé autour de la carte de circuit électrique (51) dans des zones situées dans le plan radial (AB); **caractérisé en ce que** l'élément de renforcement (52.1, 52.2) est constitué d'au moins deux coques identiques (52.1, 52.2); lesdites coques (52.1, 52.2) pouvant être connectées mécaniquement à la carte de circuit électrique (51) et/ou connectées mécaniquement l'une à l'autre; et **en ce que** l'élément de renforcement (52.1, 52.2) entoure la carte de circuit électrique (51) tout en établissant un contact mécanique avec sa surface de manière linéaire ou sur une surface plus large de sorte que l'élément de renforcement (52.1, 52.2) absorbe les vibrations de résonance mécaniques de la carte de circuit électrique (51) se produisant dans le plan radial (AB).

2. Capteur de pression (1) selon la revendication 1, **caractérisé en ce que** ledit capteur de pression (1) est un capteur de pression piézoélectrique; ledit capteur (22) est un capteur piézoélectrique (22); ledit capteur (22) produit des charges piézoélectriques sous l'impact d'un profil de pression; et l'agencement d'électrodes (23) reçoit les charges piézoélectriques produites par le capteur piézoélectrique (22) et transmet les charges piézoélectriques reçues sous forme de signaux à l'unité d'évaluation (5).

3. Capteur de pression (1) selon l'une quelconque des revendications 1 ou 2, **caractérisé en ce que** l'élément de renforcement (52.1, 52.2) entoure la carte de circuit électrique (51) dans des zones situées le long d'un axe longitudinal (CC').

4. Capteur de pression (1) selon l'une quelconque des revendications 1 ou 2, **caractérisé en ce que** l'élément de renforcement (52.1, 52.2) entoure complètement la carte de circuit électrique (51) dans le plan radial (AB).

5. Capteur de pression (1) selon l'une quelconque des revendications 1 à 4, **caractérisé en ce que** l'élément de renforcement (52.1, 52.2) fixe la carte de circuit imprimé (51) dans sa mobilité dans le plan radial (AB) par rapport au boîtier d'unité d'évaluation (50).

6. Capteur de pression (1) selon la revendication 1, **caractérisé en ce que** lesdites coques (52.1, 52.2) peuvent être reliées mécaniquement à la carte de circuit électrique (51) par au moins un élément de verrouillage (52.3, 52.3') saillant; **en ce qu'**un élément de verrouillage (52.3, 52.3') de l'une des coques (52.1, 52.2) engage la carte de circuit électrique (51) à travers une ouverture respective de l'autre coque (52.1, 52.2); et **en ce que** la carte de circuit électrique (51) est disposée entre les coques dans le plan radial (AB).

7. Capteur de pression (1) selon la revendication 1, **caractérisé en ce que** les coques (52.1, 52.2) peuvent être reliées mécaniquement l'une à l'autre par au moins un élément de verrouillage (52.3, 52.3') saillant; **en ce qu'**un élément de verrouillage (52.3, 52.3') de l'une des coques (52.1, 52.2) s'engage dans une ouverture respective de l'autre coque (52.1, 52.2); et **en ce que** la carte de circuit électrique (51) est disposée entre les coques dans le plan radial (AB).

8. Capteur de pression (1) selon l'une quelconque des revendications 1 à 7, **caractérisé en ce que** l'unité d'évaluation (5) comprend un boîtier d'unité d'évaluation (50); et le boîtier d'unité d'évaluation (50) presse l'élément de renforcement (52.1, 52.2) dans des zones sur la carte de circuit électrique (51).

9. Capteur de pression (1) selon la revendication 8, **caractérisé en ce que** l'élément de renforcement (52.1, 52.2) comprend plusieurs zones (52.6, 52.6', 52.6'') en direction longitudinale; et chaque zone (52,6, 52,6', 52,6'') a une longueur de 30 mm, préférentiellement de 60 mm, de préférence de 90 mm, en direction longitudinale.

10. Capteur de pression (1) selon la revendication 8, **caractérisé en ce que** le boîtier (50) de l'unité d'évaluation peut coulisser sur l'élément de renforcement (52.1, 52.2) en direction longitudinale d'une zone arrière (52.6'') à une zone avant (52,6); et **en ce que** l'élément de renforcement (52.1, 52.2) a des diamètres extérieurs différents dans la zone arrière (52.6 '') et dans la zone avant (52.6).

11. Capteur de pression (1) selon la revendication 8, **caractérisé en ce que** le boîtier (50) de l'unité d'évaluation peut coulisser sur l'élément de renforcement (52.1, 52.2) en direction longitudinale d'une zone arrière (52.6'') à une zone centrale (52,6') et de la zone centrale (52,6') à une zone avant (52,6); dans lequel l'élément de renforcement (52.1, 52.2) a des diamètres extérieurs différents dans la zone arrière (52.6''), dans la zone centrale (52.6') et dans la zone avant (52.6); un diamètre extérieur de la zone centrale (52,6') présentant une légère surdimensionnement par rapport au diamètre intérieur du boîtier d'unité d'évaluation (50); et **en ce que**, dans le cas d'un léger surdimensionnement, le boîtier d'unité d'évaluation (50) peut glisser manuellement sur l'élément de renforcement (52.1, 52.2).

12. Capteur de pression (1) selon l'une quelconque des revendications 10 ou 11, **caractérisé en ce qu'**un diamètre extérieur de la zone avant de l'élément de renforcement (52.1, 52.2) présente un surdimensionnement plus important par rapport au diamètre intérieur du boîtier d'unité d'évaluation (50) et **en ce que**, dans le cas d'un surdimensionnement plus important, le boîtier d'unité d'évaluation (50) ne peut pas glisser manuellement sur l'élément de renforcement (52.1, 52.2).

13. Capteur de pression (1) selon l'une quelconque des revendications 1 à 12, **caractérisé en ce que** l'élément de renforcement (52.1, 52.2) comprend au moins une zone de pliage pour compenser les différences de coefficients de dilatation thermique entre la carte de circuit électrique (51), l'élément de renforcement (52.1, 52.2) et/ou un boîtier d'unité d'évaluation (50) de l'unité d'évaluation (5) .
